Europäisches Patentamt

European Patent Office

Office européen des brevets

(19)

(11) **EP 1 316 057 B1**

(12) **EUROPÄISCHE PATENTSCHRIFT**

(45) Veröffentlichungstag und Bekanntmachung des Hinweises auf die Patenterteilung:
**16.08.2006 Patentblatt 2006/33**

(21) Anmeldenummer: **01978090.7**

(22) Anmeldetag: **03.09.2001**

(51) Int Cl.:
*G06K 9/00* (2006.01)    *G06T 7/00* (2006.01)

(86) Internationale Anmeldenummer:
**PCT/DE2001/003375**

(87) Internationale Veröffentlichungsnummer:
**WO 2002/021427 (14.03.2002 Gazette 2002/11)**

(54) **AUSWERTEN VON KANTENRICHTUNGSINFORMATION**

EVALUATION OF EDGE DIRECTION INFORMATION

EVALUATION D'INFORMATIONS DE DIRECTION D'ARETES

(84) Benannte Vertragsstaaten:
**AT BE CH CY DE DK ES FI FR GB GR IE IT LI LU MC NL PT SE TR**

(30) Priorität: **04.09.2000 DE 10043460**

(43) Veröffentlichungstag der Anmeldung:
**04.06.2003 Patentblatt 2003/23**

(73) Patentinhaber: **Fraunhofer-Gesellschaft zur Förderung der angewandten Forschung e.V.
80686 München (DE)**

(72) Erfinder:
 • **FROEBA, Bernhard
 96361 Steinbach (DE)**
 • **KUEBLBECK, Christian
 91052 Erlangen (DE)**

(74) Vertreter: **Leonhard, Frank Reimund
Leonhard - Olgemöller - Fricke
Patentanwälte
Postfach 10 09 62
80083 München (DE)**

(56) Entgegenhaltungen:
 • **MAIO D ET AL: "Real-time face location on gray-scale static images" PATTERN RECOGNITION, PERGAMON PRESS INC. ELMSFORD, N.Y, US, Bd. 33, Nr. 9, September 2000 (2000-09), Seiten 1525-1539, XP004243904 ISSN: 0031-3203 in der Anmeldung erwähnt**
 • **DONAHUE M J ET AL: "ON THE USE OF LEVEL CURVES IN IMAGE ANALYSIS" CVGIP IMAGE UNDERSTANDING, ACADEMIC PRESS, DULUTH, MA, US, Bd. 57, Nr. 2, 1. März 1993 (1993-03-01), Seiten 185-203, XP000226774 ISSN: 1049-9660**
 • **SEITZ P ET AL: "THE DIGITAL DOORKEEPER - AUTOMATIC FACE RECOGNITION WITH THE COMPUTER" PROCEEDINGS OF THE ANNUAL INTERNATIONAL CARNAHAN CONFERENCE ON SECURITY TECHNOLOGY. TAIPEI, OCT. 1 - 3, 1991, NEW YORK, IEEE, US, Bd. CONF. 25, 1. Oktober 1991 (1991-10-01), Seiten 77-83, XP000300411 ISBN: 0-7803-0120-X**

## Beschreibung

Die Erfindung befaßt sich mit dem Auffinden von Typen von physisch Körperpartien, wie Gesichtern, Händen, Beinen oder anderen Körperteilen. Diese Körperpartietypen sollen in Standbildern oder Bewegtbildern aufgefunden werden, und zwar unabhängig davon, ob dem Verfahren bekannt ist, daß eine solche Körperpartie auf dem untersuchten Bild vorhanden ist. Ist eine solche Körperpartie aufgefunden worden, soll ihre genaue Position (ihre Koordinaten) im untersuchten Bild angegeben werden und auch die Größe als Größeninformation soll zur Verfügung gestellt werden. Das Verfahren soll automatisch arbeiten.

Zur Detektion von Gesichtern sind im Stand der Technik in den letzten Jahren vor allem Verfahren vorgeschlagen worden, die typische Grauwertintensität von Gesichtsbildern zur Erkennung verwenden. Diese Detektionsverfahren, die bei Stand- oder Bewegtbildern Anwendung finden, gehen von einem Grauwertbild aus, das als solches im folgenden auch so benannt werden soll, das aber seines Bedeutungsgehaltes wegen auch andere Intensitätsbilder erfassen soll, wie Farbbilder, Farbauszugsbilder oder sonstige Bildinformation, die mit Intensitätsvariation arbeitet. Falls im folgenden also der Begriff des "Grauwertbildes" verwendet wird, soll er in dieser Allgemeinheit verstanden werden.

Eine Gattung von Erkennungsverfahren versucht einzelne Gesichtspartien, wie Augen, Nase oder Mund unabhängig voneinander zu detektieren und hinsichtlich ihrer Position zu lokalisieren. Aus den Positionen für die einzelnen ermittelten Regionen wird dann nach bestimmten Regeln oder auch nach statistischen Modellen versucht, das tatsächlich im untersuchten Bild enthaltene Gesicht zu finden.

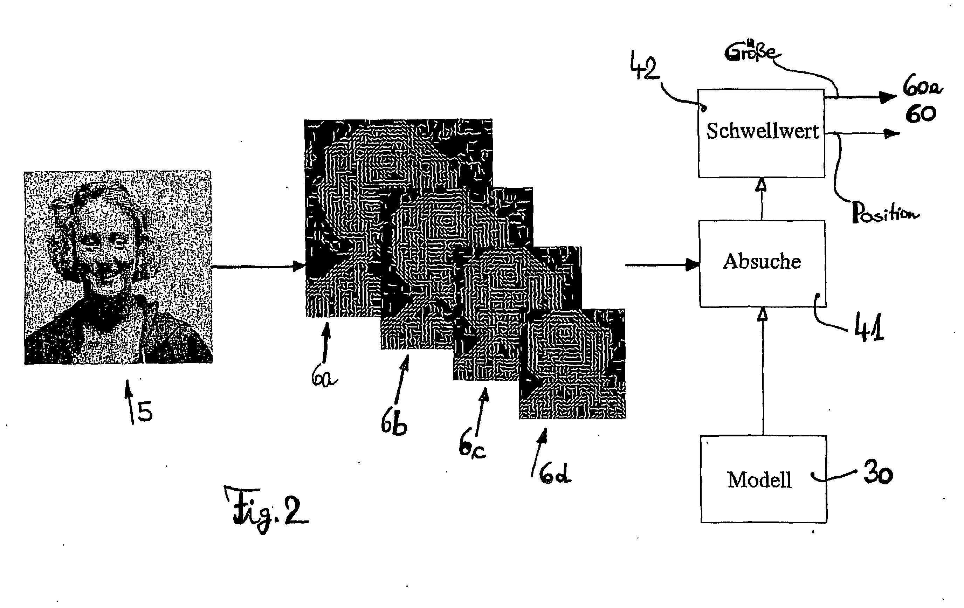

Im Stand der Technik ist auch die Auswertung von Kanten**richtungs**informationen und Kanten**deutlichkeits**informationen vorgeschlagen worden, vgl. zur Erzeugung der Kantenrichtungsinformation **Donahue/Rokhlin,** "On the Use of Level Curves in Image Analysis", Image Understanding, Vol. 57, Nr. 2, 1993, Seiten 185 bis 203, dort insbesondere Ziffern 2 und 3 zur Tangentenvektor-Berechnung sowie die dortige Figur 2 zur Veranschaulichung der Vektordarstellung. An anderer Stelle wird ein Operator vorgeschlagen, der in der Lage ist, Kanten in digitalen Bildern zu ermitteln, vgl. **Hueckel,** "An Operator Which Locates Edges in Digital Pictures", J. Assoc. Comput., March, 1971, Vol. 18, Seiten 113 bis 125. Zur Erkennung von Gesichtern ist die Kanteninformation (im folgenden auch Randlinieninformation bezeichnet) von **Maio/Maltoni** verwendet worden, vgl. "Fast Face Location in Complex Backgrounds", aus Face Recognition, From Theory to Applications, NATO ASI Series F: Computer and Systems Sciences, Vol. 163, 1998, Seiten 568 bis 577, sowie eine spätere Veröffentlichung derselben Autoren in Pattern Recognition, Vol. 33, 2000, Seiten 1525 bis 1539, "Real-Time Face Location on Gray-Scale Static Images".

In letzteren Schriften sind in den jeweiligen Figuren 2 Grauwertbilder gezeigt, die in Kantenrichtungsbilder umgesetzt werden, unter Bildung von Vektorlängen und Konsistenz, dort Richtungszuverlässigkeit bezeichnet. Die Vektorrichtung repräsentiert dort die Tangente zu der Kante des Bildes, und die Länge, dort Signifikanz genannt, bestimmt sich als eine Summe aus den Kontrastwerten, im Sinne einer Kantenstärke oder Kantendeutlichkeit. Zusätzlich wird die "Consistency" verwendet, die als Richtungszuverlässigkeit erläutert ist.

Die Auswertung einer Vielzahl von Richtungsinformationen, Zuverlässigkeits-Informationen und Deutlichkeitsinformationen ist komplex und erfordert einen hohen Rechenaufwand. Selbst moderne Computer können dafür nicht hinreichend Rechenleistung zur Verfügung stellen, alternativ können kleinere Rechner mit geringeren Rechenleistung keine Anwendung finden.

Die Erfindung hat es sich deshalb zur **Problemstellung** gemacht, ein Erkennungsverfahren vorzuschlagen, das physisch abgegrenzte Körperpartien, z.B. Gesichter, zu lokalisieren vermag, dabei einen kleineren Rechenaufwand einsetzt und dennoch eine ausreichende Erkennungsgenauigkeit bereitstellt.

Die Erkenntnis der Erfindung liegt darin, nicht sämtliche Information auszuwerten, sondern nur solche Information auszuwerten, die für das Erkennungsergebnis hinreichend ist. Dabei verwendet die Erfindung maßgeblich die Richtungsinformation, die aus einem Intensitätsbild, z.B. einem Grauwertbild oder einem Farbauszugsbild, aus dort anwesenden Randlinien entnommen werden kann. Die Randlinien werden oft auch "Kanten" bezeichnet, ob ihrer Herkunft einer im Original vorliegenden Kante, die in einer zweidimensionalen Darstellung als eine Randlinie bezeichnet werden soll.

Diese Kante (Linie) hat sowohl eine Richtung, wie auch eine Stärke (Deutlichkeit). Im Stand der Technik existieren Verfahren, die eingangs angesprochen waren und mit denen solche Informationen aus Grauwertbildern berechnet werden können. Erfindungsgemäß wird daraus die Kantenrichtung maßgeblich verwendet, und die Kantendeutlichkeit bei dem Vergleich mit einem Modellbild unberücksichtigt gelassen. Das Modell(bild) ist ein künstlich geschaffenes Bild, das für den Typ von Körperpartien steht, die auf dem Grauwertbild aufgefunden und durch Angabe von Positionsinformation lokalisiert werden sollen (Anspruch 3, Anspruch 11).

Der Unterschied zwischen einem Auffinden und einem Lokalisieren kann darin gesehen werden, daß eine zusätzliche Vorab-Information verfügbar ist, namentlich diejenige, daß dem Verfahren mitgeteilt wird, daß zumindest eine Körperpartie der gesuchten Art auf dem Bild vorhanden ist. Dann wird das Verfahren Positionsinformation bereitstellen und ermitteln, an welcher Stelle des Bildes (aus Helligkeitswerten), im folgenden als Zielbild bezeichnet, diese Körperpartie sich befindet. Sie kann zusätzlich Größeninformation zur Verfügung stellen, um die gesuchte Körperpartie im Zielbild zu definieren.

Hat das Verfahren keine solche Vorab-Information über die Anwesenheit eines beispielsweise Gesichtes, kann das Verfahren unter Verwendung eines Schwellenwertes zusätzlich ermitteln, ob überhaupt ein solches Gesicht als Beispiel einer gesuchten Körperpartie auf dem Zielbild vorhanden ist (Anspruch 14, Anspruch 9). Zusätzlich kann dann die zuvor beschriebene Ermittlung der Positionsinformation und der Größeninformation bereitgestellt werden (Anspruch 3).

Das erfindungsgemäße Verfahren ermöglicht es mit wenig Modellinformation und mit herabgesetzter Information aus dem Kantenrichtungsbild eine schnelle Detektion zu realisieren und eine hohe Erkennungssicherheit zu erreichen.

Linienrichtungen innerhalb der einen abgebildeten Körperpartie und Linienrichtungen der abgebildeten und physisch abgegrenzten Körperpartie werden verwendet. Die Kantenrichtung sowohl des eigentlichen Randes der gesuchten Körperpartie, wie auch die Kantenrichtungen innerhalb dieser Umrandung werden über das Modell ausgewertet (Anspruch 4). Die übrigen Kantenrichtungen, die sich auch auf dem Zielbild befinden, werden bei dem Vergleich mit dem Modell zu einem geringeren Übereinstimmungswert führen, so daß der Wert der Übereinstimmung der Kantenrichtungsinformation im Zielbild mit der Kantenrichtungsinformation des Modells zu der Ermittlung der Positionsinformation des Zielbildes führt (Anspruch 13, Anspruch 23).

Werden zusätzlich zu der Positionsinformation Größeninformationen benötigt, kann eine relative Veränderung der Modellgröße und des Zielbildes zueinander erfolgen (Anspruch 12). Dabei wird das Zielbild mit einer ersten Größe eines Modells zunächst einmal insgesamt verglichen. Anschließend wird entweder das Modell in seiner Größe verändert, oder das Zielbild. Es folgt ein weiterer Lauf eines vollständigen Vergleiches. Mehrere dieser Läufe erbringen für jede Größenrelation (ein jeweiliges Verhältnis der Größe des Zielbildes zu dem aktuellen Modell) mehrere Sätze von ÜbereinstimmungsWerten. Diejenigen Übereinstimmungswerte, die die größte Ähnlichkeit haben, zeigen durch die zu diesen Übereinstimmungswerten gehörende Relation die Größe der Körperpartie an, die in dem Zielbild aufzusuchen war.

Wird im Beispiel das Modell schrittweise vergrößert, hat derjenige Vergleich die größten Übereinstimmungen, bei dem das Modell im wesentlichen die Größe der Körperpartie besitzt, die zu lokalisieren und hinsichtlich ihrer Größe zu definieren war.

Die bekannten Verfahren zur Ermittlung der Kanteninformation erbringen z.B. bei der Verwendung des Sobel-Operators für jedes Bildpixel (einen jeweiligen kleinsten Bereich eines Bildes, ggf. auch mehrere Bildpixel zusammengenommen) sowohl eine Richtungsinformation, wie auch eine Deutlichkeitsinformation. Letztere Deutlichkeitsinformation wird oft auch Kantenstärke genannt. Wird die Kantenstärke dazu herangezogen, in einem Vergleich mit einem Schwellenwert nur diejenigen Richtungsinformationen beizubehalten, bei denen ein Mindestwert an Kantenstärke vorliegt, so wird Richtungsinformation im Bild herabgesetzt (Anspruch 16). Das Herabsetzen der Information geschieht an denjenigen Stellen, an denen die Richtung nicht zuverlässig erkennbar ist und als informationsarmes Rauschen angesehen werden muß.

An den Stellen des Zielbildes, an denen die Deutlichkeit groß ist, bleibt die Richtungsinformation für die Auswertung erhalten (Anspruch 18, Anspruch 19). Durch dieses Verfahren wird nur diejenige Information zurückbehalten, die für den Vergleich mit dem Modell, das ebenfalls Kantenrichtungsinformation besitzt, die größte Erkennungserwartung bietet.

Werden dann in den verbleibenden Richtungsinformationen die Deutlichkeitsinformationen auf einen Standardwert gesetzt (Anspruch 17), fallen sie in ihrer Gewichtung aus dem Vergleich mit dem Modell gänzlich heraus. Der Vergleich des verbliebenen Arbeitsbildes mit dem Modellbild besteht dann nur noch aus einem Vergleich von Richtungen, die eine schnelle Bearbeitung und trotz des reduzierten Informationsgehaltes eine sicherere Erkennung ermöglichen.

Das Modell ist mehrfach angesprochen worden. Das Modell besteht beispielsweise aus einer Vielzahl von Richtungsinformationen einer Teststichprobe. Das Modell kann aber auch ein einzelnes Bild sein, das hinsichtlich seiner Kantenrichtungen im oben beschriebenen Sinne vorgegeben ist, wobei solche Bereiche des Bildes, in denen sich hinsichtlich der Richtung Rauschen befindet, ausgeblendet werden (Anspruch 16, a.E. in einem alternativen Verständnis). Die Vorgabe des Modells aus einem einzelnen Testbild erfolgt dadurch, daß der Benutzer die Körperpartie, die das Modell prägen soll, also ein Gesicht, eine Hand oder einen Fuß, vorgibt und dieses gemäß Anspruch 16 bearbeitet wird.

Der Vergleich zwischen dem Modell mit den Richtungsinformationen und den verbleibenden Richtungsinformationen in dem Zielbild erfolgt durch eine Ähnlichkeitsbetrachtung, die bei einer Richtungsorientierung dieser beiden Bilder ein Winkelvergleich sein kann (Anspruch 13 oder Anspruch 23).

Der Winkelvergleich kann aus einer Summe von Differenzwinkeln (Summanden) bestehen, die für die Größe des Modells für jeden Modellpunkt oder für jedes Pixel des Bildes durchgeführt wird und dann für die gesamte Modellfläche für eine Stelle des Zielbildes abgelegt wird (Anspruch 24). Herrscht eine hohe Übereinstimmung, ist die Winkeldifferenz für jeden Pixelvergleich gering, wenn nicht Null. Die Summe von geringen Winkelwerten führt zu einem geringen Summenwert (Anspruch 27). Ein Vergleich solcherart ermittelter Ähnlichkeiten für das gesamte Zielbild und verschiedene Relativlagen Modell/Zielbild führt dort, wo die Summe am geringsten ist, zu einem höchsten Übereinstimmungswert (Anspruch 13).

Neben Winkeldifferenzen können auch trigonometrische Funktionen von Winkeln oder Winkeldifferenzen Anwendung finden (Anspruch 24).

Besteht kein A-priori-Wissen (kein Vorwissen), ob auf dem Zielbild die vom Typ her gesuchte Körperpartie vorhanden ist, wird eine zusätzliche Schwelle bereitgestellt, die einen relativ geringen Mindestwert besitzt (Anspruch 9, Anspruch 25). Nur bei Auffinden einer Ähnlichkeit, die unter diesem Mindest-Schwellenwert liegt, kann darauf geschlossen werden, daß der gesuchte Typ von Körperpartien auf dem Bild repräsentiert ist. Dieser Schwellenwert darf nicht Null und nicht maximal sein, sonst würde das Verfahren nur den minimalen Wert aller Ähnlichkeitswerte, die über das Zielbild verteilt sind, ermitteln. Dieser Wert muß nicht zwingend mit der Position einer gesuchten Körperpartie übereinstimmen, sondern gibt nur einen Wert wieder, der auch äußerst groß sein kann (Anspruch 14).

Liegt ein Vorab-Wissen über das Vorhandensein einer gesuchten Körperpartie vor, braucht ein solcher Schwellenwertvergleich nicht zu erfolgen, nachdem dann der aufgefundene Minimalwert der Ähnlichkeitswerte (nach Anwenden des Vergleiches verschiedener Größenrelationen) von selbst den Ort (die Position) der gesuchten Körperpartie angibt.

Die Lokalisierung durch Festhalten (meist in Form von Speicherungen) von Positionsdaten ergibt sich nach Auswerten eines Satzes von wiederholten Vergleichen mit dem Modellbild, wobei jeder Vergleich eine andere lokale Zuordnung von Modellbild und Randlinieninformation des Zielbildes besitzt. Ein Beispiel einer jeweils anderen lokalen Zuordnung ist ein pixelweises seitliches Verlagern über das Zielbild hinweg. Erreicht eine Randbegrenzung des Modellbildes den Rand des Zielbildes, wird um ein Pixel nach unten verlagert und wieder für die gesamte Zeile der Pixel verglichen. Diese wiederholten Vergleiche geben einen Satz von Ähnlichkeitswerten, namentlich für jede Lage des Modellbildes. Aus diesem Satz von Ähnlichkeitswerten kann der beste Ähnlichkeitswert auf den Ort schließen, bei dem das Modellbild die beste Übereinstimmung im Zielbild besaß.

Werden verschiedene Größenrelationen zusätzlich herangezogen, ergibt sich ein weiterer Satz von Ähnlichkeitswerten. Werden die Ähnlichkeitswerte untereinander verglichen, so können auch die Sätze von Ähnlichkeitswerten miteinander verglichen werden, um die Lage und die Größe der abgegrenzten Körperpartie zuverlässig zu ermitteln.

Eine Summe von Ähnlichkeitsdaten, beispielsweise ein Winkelvergleich an je einem Pixel, ergibt einen Ähnlichkeitswert. Der Ähnlichkeitswert repräsentiert eine lokale Zuordnung. Er repräsentiert auch eine Größenzuordnung im Sinne einer Größenrelation.

Die Ähnlichkeitsdaten werden durch Winkelvergleich gebildet (Anspruch 24), wobei sowohl einfache Winkeldifferenzen, wie auch trigonometrische Funktionen von Winkeldifferenzen, wie auch trigonometrische Funktionen von Winkeln und anschließende Differenzbildung erfolgen kann.

Wird mit reduzierten Richtungsinformationen gearbeitet (Anspruch 16), so finden sich nicht an allen Stellen des Modells Winkelinformationen und es finden sich nicht an allen Stellen des hinsichtlich der Richtungsinformation ausgewerteten und reduzierten Zielbilds Richtungsinformationen. Einen Beitrag zu einem Ähnlichkeitswert (im Sinne eines Ähnlichkeitsdatenwerts) wird dabei nur dann gebildet, wenn an der betrachteten Pixelstelle beide Vergleichsbilder eine Winkelinformation vorliegen haben (Anspruch 26). Dies geht von der Überlegung aus, daß dort, wo Rauschen vorhanden ist und die Winkelinformation aufgrund geringer Informationszuverlässigkeit ausgeblendet wurde, auch keine große Ähnlichkeit hinsichtlich des gesuchten Objektes vorliegen kann.

Die Reduzierung der Richtungsinformation gemäß Anspruch 16 kann zusätzlich mit einem Binäroperator arbeiten, der nach dem Vergleich mit dem Schwellenwert Anwendung findet (Anspruch 19). Es ergibt sich dann ein Schablonenbild, welches nur noch zwei Zustände für sämtliche Pixel besitzt, den maximalen Wert oder den minimalen Wert. Bei einer bildlichen Darstellung mit Graustufen zwischen 0 und 255 entspricht das den beiden genannten Randwerten. Dieses Schablonenbild eignet sich bei gleicher Größe zu einer Multiplikation mit dem die Richtungsinformation enthaltenden Zwischenbild, um das Arbeitsbild zu ergeben. Alle Richtungsdaten, bei denen der Deutlichkeitswert oberhalb des Schwellenwertes liegt, bleiben erhalten. Alle Richtungsdaten, bei denen der Deutlichkeitswert unterhalb des Schwellenwertes liegt, werden gelöscht.

Für die Erstellung des Ähnlichkeitswertes als Summe der einzelnen Summanden der Ähnlichkeitsdaten müssen nicht sämtliche Ähnlichkeitsdaten für eine relative Lage von Modell und Zwischenabbildung herangezogen werden (Anspruch 20). Es genügt die Verwendung der besten Übereinstimmung, also nur eine eingeschränkte Zahl von Summanden. Bei beispielsweise 120 möglichen Werten, brauchen nur die 80 geringsten (die 80 am besten übereinstimmenden Ähnlichkeitsdaten) zur Bildung des durch Summation entstehenden Ähnlichkeitswertes herangezogen zu werden.

Eine weitere Vereinfachung ergibt sich dann, wenn nur spitze Winkel berücksichtigt werden, also nicht sämtlich Winkel im Bereich zwischen 0° und 180°. Das setzt eine Umrechnung der Winkel voraus, bei der Winkel oberhalb von 90° wie solche Winkel behandelt werden, die unterhalb von 90° liegen. Die Umrechnung geschieht so, daß Randlinien, die in einem Winkel von 90° verlaufen, die geringste Übereinstimmung ergeben. Zwischen 90° und 180° wird die Übereinstimmung besser. Von 0° bis 90° wird die Übereinstimmung schlechter (Anspruch 21).

Das Modell kann entsprechend als Modellbild mit nur Richtungsinformation mit Winkeln zwischen 0° und 90° arbeiten (Anspruch 22).

Ausführungs**beispiele** erläutern und ergänzen die Erfindung. Die Erfindung wird dazu anhand von Ausführungs**beispielen** ("embodiments") erläutert und ergänzt, wobei darauf hingewiesen wird, daß es sich bei der folgenden Darstellung um die Beschreibung von bevorzugten Beispielen der Erfindung handelt.

| **Figur 1** | ist ein Blockschaltbild eines ersten Ausführungsbeispiels, gerichtet auf die Erkennung eines Gesichtes in einem Grauwertbild 5. |
| --- | --- |
| **Figur 2** | ist ein alternatives Ausführungsbeispiel, auch mit einer auf ein Gesicht ausgerichteten Erkennung, wobei Größeninformationen zusätzlich herangezogen werden. |
| **Figur 2a bis Figur 2e** | sind Darstellungen unterschiedlicher Bearbeitungsstufen des Grauwertbildes der Figur 2a. Dabei ist Figur 2e ein Kantenrichtungsbild (Randlinienrichtungs-Bild), das insoweit sämtliche Informationen des Ausgangsbildes der Figur 2a enthält. |
| **Figur 3** | ist ein Kantenrichtungsbild, bei dem die Information des Bildes von Figur 2e nur noch partiell vorhanden ist. Außerdem ist diese Darstellung invertiert, also mit weißen Richtungen bei dunklem Hintergrund. |
| **Figur 4** | |
| **Figur 5** | entsprechen einer Gegenüberstellung der beiden zuvor genannten Bilder der Figur 2e und der Figur 3, wobei eine gleiche Darstellung mit dunklen Richtungspfeilen gewählt ist. |
| **Figur 6** | ist eine Darstellung einer Ähnlichkeitsberechnung für ein Grauwertbild mit unterschiedlichen Größen eines zu Vergleichszwecken herangezogenen Modells. |
| **Figur 6a** | ist eine vergrößerte Darstellung des Bildes von Figur 6, wobei der Helligkeitswert an jeweils einer Bildposition (einem Pixel) das Maß der Übereinstimmung des Modells mit einem der Modellgröße entsprechenden Bildabschnitt symbolisiert. Helle Bereiche sind Bereiche geringer Übereinstimmung. Dunkle Bereiche sind Bereiche hoher Übereinstimmung. |
| **Figur 7** | ist ein zu Figur 6 gehörendes Grauwertbild, bei dem die gesuchte Körperpartie als Gesicht im eingezeichneten Rahmen 60 aufgefunden wurde. |
| **Figur 8** | ist ein Beispiel für eine Modellgenerierung aus 10 Bildern einer Stichprobe. Das Modell 30 enthält selektierte Kantenrichtungsinformation. |

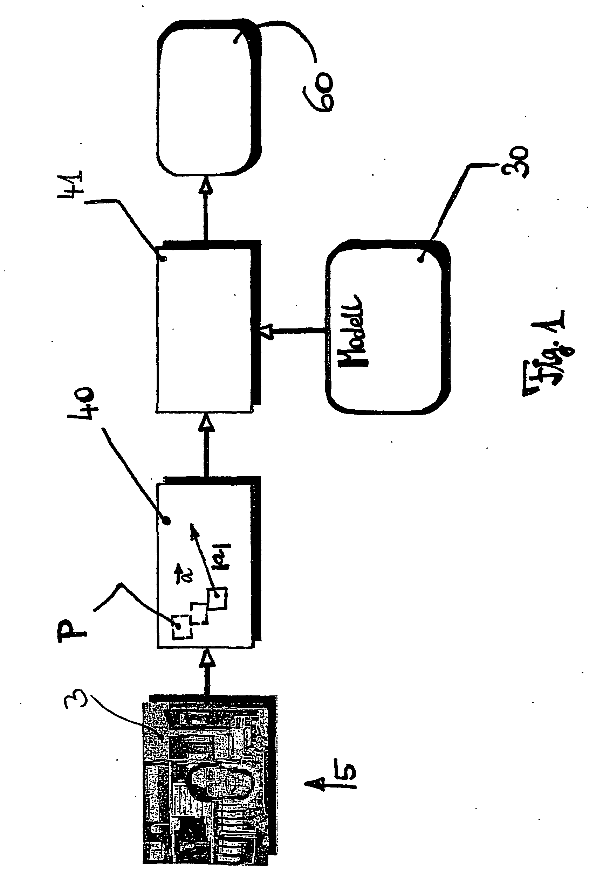

**Figur 1** geht von einem Grauwertbild 5 als Beispiel eines Intensitätsbildes aus. Ein Gesicht ist dort in einer Kopf-mit-Schulter-Darstellung vor einem Hintergrund gezeigt. Das Grauwertbild wird einer ersten Verfahrensstufe zugeführt. Diese Verfahrensstufe 40 wertet das Bild in vielen Teilbereichen aus und bildet Kanteninformation. Die Teilbereiche sind entweder einzelne Pixel oder mehrere zusammengefaßte Pixel für einen kleinen Bildabschnitt. Für jeden dieser Teilbereiche, insbesondere für jedes Pixel des Grauwertbildes, wird eine Kanteninformation nach Richtung und nach Stärke angegeben. Repräsentiert kann das durch die Angabe eines Vektors erfolgen, der eine Richtung und einen Betrag (Länge) besitzt.

Die einzelnen Pixel sind mit P und symbolisch im Verfahrensschritt 40 angedeutet.

Das entstandene kantenorientierte Bild wird mit einem Modell 30 in einem weiteren Verfahrensschritt 41 verglichen. Der Vergleich erfolgt mit einem kleineren Modell, das über das Bild verschoben wird. Für jede Position des Modells auf dem Kantenrichtungsbild entsteht ein Übereinstimmungswert. Dann wird das Modell um ein Pixel nach rechts verschoben und ein neuer Übereinstimmungswert ermittelt. Alle Übereinstimmungswerte decken das Kantenrichtungsbild und damit auch das Grauwertbild (abzüglich der Höhe bzw. Breite des Modells) flächig ab, so daß für jede Lage des Modells im Grauwertbild unter Zuhilfenahme des Modells in dem Verfahrensschritt 41 ein Übereinstimmungswert zur Verfügung steht, der die Übereinstimmung des Modells in dieser lokalen Zuordnung mit dem Kantenrichtungsbild angibt. Aus diesen Übereinstimmungswerten des Verfahrensschritts 41 ermittelt der Verfahrensschritt 60 denjenigen Bereich, in dem die Übereinstimmung am größten ist. Dieser Bereich ist dann derjenige Bereich des Grauwertbildes, in dem das zu erkennende Gesicht, als Spezialfall einer vorgewählten Körperpartie, liegt.

Das abgewandelte Beispiel der Figur 1 ist die **Figur 2** als weiteres Ausführungsbeispiel. Hier wird zusätzlich zu der Positionsinformation 60 der Figur 1 auch eine Größeninformation ausgegeben. Der Funktionsblock 41 entspricht dem Schritt 41 der Figur 1. Das Modell 30 entspricht auch dem Modell 30 der Figur 1. Das Grauwertbild 5 entspricht ebenfalls dem ebenso bezeichneten Bild 5 der Figur 1. Das Grauwertbild wird auch in ein Kantenrichtungsbild gemäß Verfahrensschritt 40 von Figur 1 umgesetzt. Dieses Kantenrichtungsbild wird dem Verfahrensschritt 41 übergeben, der die Vergleiche mit dem Modell flächig über das Bild vornimmt.

Nach jeweiligem Abschluß eines Vergleiches wird ein in seiner Größe verändertes Kantenrichtungsbild in einem erneuten Verfahren auf Ermittlung von Ähnlichkeitswerten verwendet, das ebenso arbeitet, wie das zuvor beschriebene Verfahren im Abschnitt 41.

Die vier dargestellten Größen des Kantenrichtungsbildes, die Größen 6a,6b,6c und 6d führen dann zu vier Sätzen von Übereinstimmungswerten (Ähnlichkeitswerten), die jeweils das gesamte Bild erfassen. Das Modell ist bei diesem Beispiel in seiner Größe nicht verändert worden. Figur 2 kann in einem weiteren - nicht dargestellten - Ausführungsbeispiel aber auch so betrieben werden, daß das Kantenrichtungsbild seine Größe beibehält und das Modell für einen jeweiligen Verfahrensschritt 41 eine bestimmte Größe beibehält und danach für einen weiteren solchen Verfahrensschritt 41 eine reduzierte oder vergrößere Abmessung besitzt. Auch daraus folgen mehrere Sätze von Übereinstimmungswerten, aus denen der Verfahrensschritt 42 sowohl die Position 60 wie auch die Größe 60a der gesuchten Körperpartie ermitteln kann.

Dazu wird ein Schwellenwert verwendet, wenn unsicher ist, ob das geprüfte Zielbild 5 die gesuchte Körperpartie, hier ein Gesicht, tatsächlich enthält. Das Modell 30 ist dabei ein Kantenrichtungsmodell vom Typ "Gesicht", um nur Gesichter als Kantenrichtungsmodell mit Gesichtern als Kantenrichtungsbild (entwickelt aus dem Grauwertbild 5) zu vergleichen. Die Vorgabe eines Schwellenwerts in dem Verfahrensschritt 42 stellt sicher, daß auch ohne Vorab-Kenntnis des Vorhandenseins eines Gesichtes in dem Grauwertbild 5 sichergestellt werden kann, daß das Ermittlungsergebnis sinnvoll ist. Würde ein Schwellenwert nicht vorgesehen werden, so könnte für ein ohne Vorwissen ausgestattetes Verfahren keine Entscheidung darüber getroffen werden, ob ein gefundener Maximalwert in den beschriebenen Ähnlichkeitswerten einen unbedeutenden Übereinstimmungsfaktor signalisiert, oder einen bedeutenden. Der Schwellenwert im Verfahrensschritt 42 ist aber dann nicht erforderlich, wenn ein Vorab-Wissen vorhanden ist und es nur darum geht, den Ort (die Position) und die Größe des erwarteten Gesichtes zu ermitteln und anzugeben.

Die Abfolge der **Figuren 2a bis 2e** soll verdeutlichen, wie das Verfahren gemäß den Figuren 1 und 2 arbeitet. Dabei werden die einzelnen Verfahrensstufen wiedergegeben und aufgezeigt, wie das jeweils bearbeitete Ausgangsbild 5, das in Figur 2a als ein intensitätsvariierendes Grauwertbild dargestellt ist, nach einem entsprechenden Einfluß der genannten Berechnungen sich verändert. Dazu sind in Figur 2a mehrere Teile des Bildes eingezeichnet worden, die in den späteren Bildern auftauchen und zu Vergleichszwecken dort ebenso benannt sind.

Einige dieser Bildbereiche im Grauwertbild sollen erläutert werden. Der Hintergrund ist generell mit 3 bezeichnet, er besteht aus einer schräg verlaufenden Wand. Auf dieser Wand sind zwei hervorstechende Linien 4a, 4b, die schräg hinter dem abgebildeten Gesicht nach rückwärts verlaufen. Das abgebildete Gesicht soll generell mit 2 bezeichnet sein. Das Gesicht und der gezeigte Schulterabschnitt weisen innere "Kanten" im Sinne von Linienstrukturen auf, die innerhalb des Gesichtes mit 5d und 5e bezeichnet sind. Die beiden Schulterbereiche, die einen starken Kontrast zum Hintergrund 3 besitzen, sind mit 5b und 5c bezeichnet. Die generelle Randlinie des Gesichtes ist 5a, sie schließt die beiden innerhalb des Gesichtes befindlichen Rand- oder Begrenzungslinien, als zweidimensional abgebildete Kanten 5e, 5d ein.

Die Figur 2b entsteht innerhalb des Verfahrensschrittes 40. Es ist die Vorstufe zur Bildung von Kantenrichtungsinformation in dem Grauwertbild, zur Auswertung mit dem Modell 30. Bei dieser Vorstufe ist das Grauwertbild so verändert, daß es mit einem Operator bearbeitet worden ist, der Kontraste verstärkt. Ein solcher Operator ist beispielsweise der Sobel-Operator, der für jedes Pixel des Bildes eine Stärke der Kante und eine Richtung der Kante anzugeben vermag. Jedes Pixel ist bildlich in Figur 2b durch die starke Vergrößerung in einem entstehenden Raster ersichtlich. Besonders deutlich treten die Schulterkanten 5c,5b in diesem Zwischenbild der Figur 2b auf. Auch die Randlinie des Gesichtes 5a ist deutlich zu erkennen, ebenso wie die innerhalb des Gesichtes liegenden Randlinien 5d, 5e. Nicht zum Gesicht gehörig, aber in der bearbeiteten Fassung auch deutlich als Kante ersichtlich sind die Linien 4a, 4b des Hintergrundes 3. Der Bereich 1 des Bildes ist mit wenig Kanteninformation gefüllt, nachdem hier kaum Kanten zu erkennen sind und dieser Bereich als Rauschen mit wenig auszuwertender Information angesehen werden muß.

Der Bearbeitungsschritt zum Ergebnis der Figur 2b ermittelt durch Kontrastvergleich von Pixeln die beschriebenen Verdeutlichungen der Kanten. Der Sobel-Operator ist insoweit als ein lineares Filter zu verstehen, das flächig und wie ein Hochpaß wirkt. Das gezeigte Raster entspricht den Pixeln. Die Liniendeutüchkeit der Kanten steigt mit der Intensitätsdifferenz, beispielsweise der Kanten 5c und 5b gegenüber dem Hintergrund 3.

Nicht dargestellt ist die tatsächliche, im Rechner befindliche Vektordarstellung des Bildes. Sie ist aber anhand der Darstellung der Figur 2b ohne weiteres vorstellbar. Jedes Pixel erhält einen Vektor zugeordnet, der eine Richtung und eine Länge hat. Ein solcher Vektor kann in kartesischer Darstellung gespeichert sein, er kann aber auch in Polarkoordinaten-Darstellung nach Betrag und Winkel angegeben werden. Jedes Pixel $P_{xy}$ auf der Bildfläche $x \cdot y$ erhält dazu die Orientierung und Länge eines solchen Vektors zugeordnet. Mit den beiden Werten der Länge und der Richtung besitzt jedes Pixel ein Maß für die Kantenrichtung und ein Maß für die Kantendeutlichkeit.

In einem weiteren Bild, **Figur 2c**, werden solche Informationen ausgeblendet, die keine sinnvollen Auswertungsergebnisse erlauben. Dazu wird ein Schwellenwert angewendet, mit dem jedes Pixel des Bildes verglichen wird, und zwar hinsichtlich der Kantendeutlichkeit. Überschreitet die Kantendeutlichkeit an einem Pixel den vorgegebenen Schwellenwert, so verbleibt dieser Wert auch mit der Richtungsinformation an diesem Pixel in dem Bild der Figur 2c. Bereiche wie derjenige Bereich 1 oder der dunkle Teil des Hintergrundes 3 unterhalb der Linie 4b bis zur kontraststarken und damit sehr deutlich auftretenden Kante 5c werden ausgeblendet bzw. mit einem schwarzen Wert versehen, der dem Zahlenwert Null entspricht. Bei einer Grauwertskalierung zwischen den Werten 0 und 255 entspricht der Wert 255 einer deutlichen Kante und damit einem hellen Wert, während der Wert 0 einem für die weitere Verarbeitung unbeachtlichen Wert entspricht. Trotz des Vergleiches mit dem Schwellenwert besitzt jedes Pixel, das eine Kantendeutlichkeit oberhalb des Schwellenwertes besaß, noch immer einen analogen Wert, der zwischen dem Schwellenwert und dem Wert 255 liegt.

In **Figur 2d** ist dieser analoge Anteil getilgt. Hier hat eine Binarisierung stattgefunden, die auch im Verfahrensschritt 40 der Figur 1 vorgesehen ist. Die Binarisierung führt zu einem Wegfall jeder analogen Information und bewertet die Pixel in der Darstellung der Kantendeutlichkeit und der Kantenrichtung nur nach Überschreiten oder Unterschreiten des vorgenannten Schwellenwertes. Solche Kantendeutlichkeiten, die oberhalb des Schwellenwertes lagen, sind mit dem Wert 255 belegt (jeweils bezogen auf ein Pixel). Solche Werte, die unterhalb oder gleich dem Schwellenwert waren, sind als schwarze Pixel mit dem Wert 0 belegt. Das Bild von Figur 2d kann als binarisiertes Kantenbild bezeichnet werden.

Es entsteht sinngemäß dadurch, daß die Schwellenwertbildung verwendet wird. Auch ein direkter Übergang von Figur 2b zu Figur 2d ist möglich, wenn das Bild 5 Pixel für Pixel im Verfahrensschritt 40 durch Schwellenwertvergleich und Binarisierung bearbeitet wird. Die Binarisierung schafft eine Kontrastmaximierung für das im folgenden weiter zu bearbeitende Bild der Figur 2d.

Aus **Figur 2e** ist die Kantenrichtungsinformation ersichtlich, dargestellt durch kurze Linienstücke. Die Richtung der Linienstücke entspricht der Polarkoordinaten-Darstellung hinsichtlich der Richtung. Bei einem genauen Hinsehen ist erkennbar, daß die Richtungsinformation im Gesichtsbereich und im Schulterbereich mit den in Figur 2a eingezeichneten Linien vergleichbar ist. Die Linien 5c und 5b sind deutlich erkennbar. Ebenso die inneren Linien 5e und 5d. Auch die Gesamtlinie 5a als Umrandung des Gesichtes ist erkennbar. Nicht so deutlich sind die schräg verlaufenden Linien 4a, 4b zu erkennen, was aber nur ein Darstellungsproblem der zur grob gerasterten Richtungsanzeige verwendeten 6 Pixel ist. Besonders deutlich sind vertikale Linien und horizontale Linien.

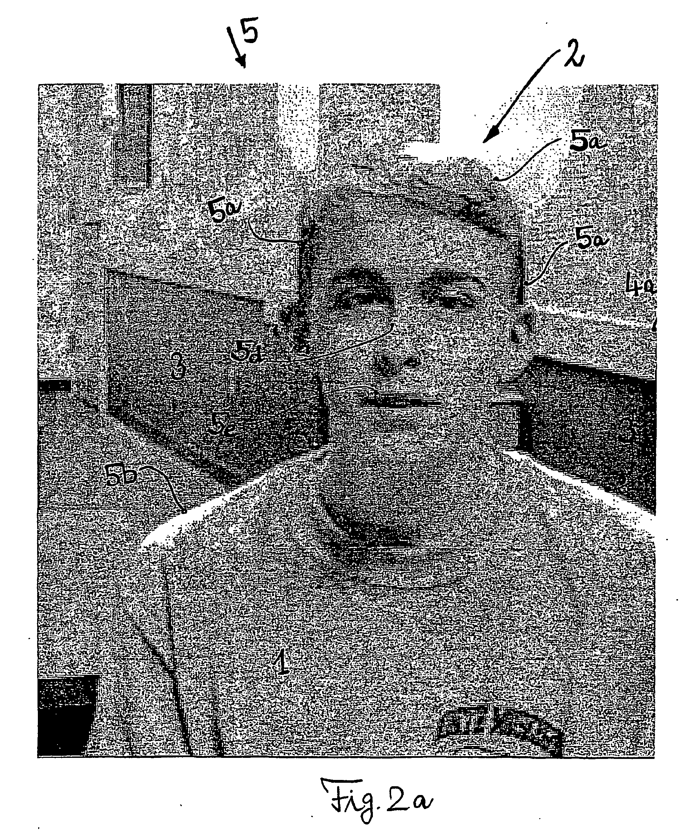

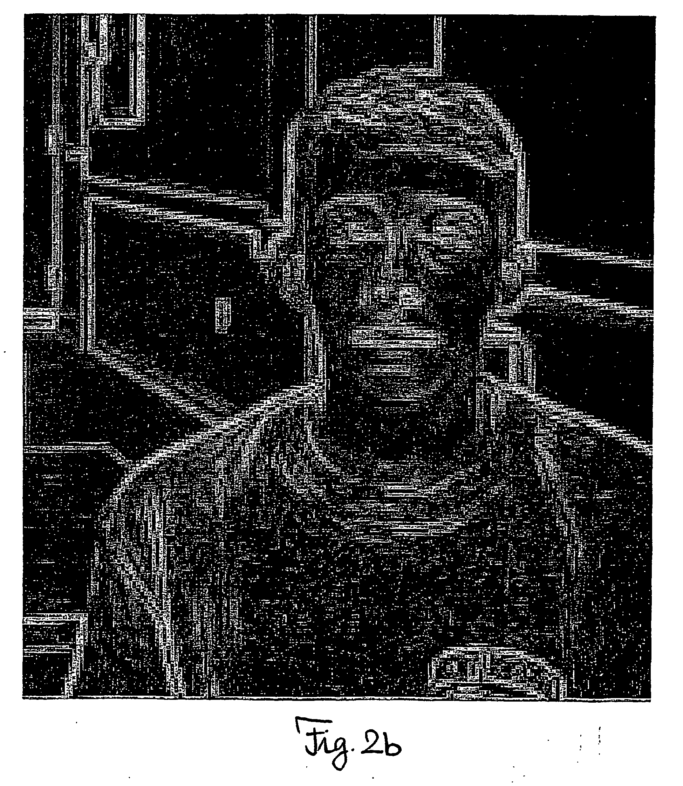

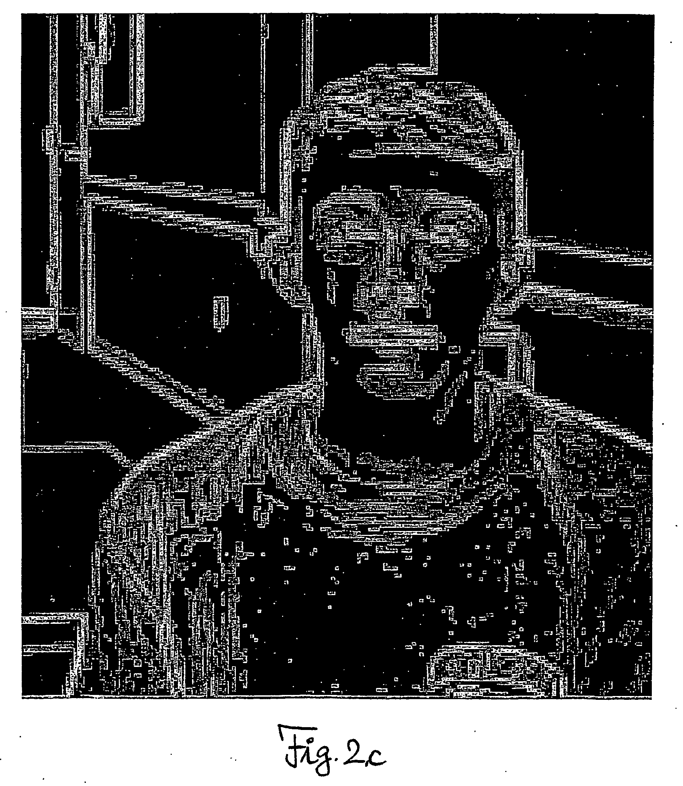

**Figur 3** zeigt als Ergebnis der Bearbeitung ein im Informationsgehalt reduziertes Bild. Hier ist aus Figur 2e nur derjenige Bereich herausgegriffen, der wesentliche Kanteninformation enthält. Diese Ausblendung des unwesentlichen Gehalts erfolgt durch eine Zusammenführung der Bilder nach Figur 2d und Figur 2e. Diejenigen Bereiche, die in dem kontrastmaximierten Bild auf Schwarz gesetzt worden sind, also unterhalb des Schwellenwertes lagen, sind in der Figur 3 ebenfalls schwarz. Der Informationsgehalt, also sowohl die Kantendeutlichkeit, wie auch die Kantenrichtung, ist in diesen Bereichen aus der Figur 2e herausgenommen worden. Es verbleiben für die Figur 3 nur diejenigen Richtungsinformationen, die sich an den Pixeln befinden, welche einen Deutlichkeitswert besitzen, der oberhalb des Schwellenwertes ist.

Der Schwellenwert kann abhängig von dem Typ des Bildes oder den vorhandenen Kontrasten frei gewählt werden. Er kann auch gänzlich wegfallen, wenn das Bild als solches wenig Rauschen aufweist.

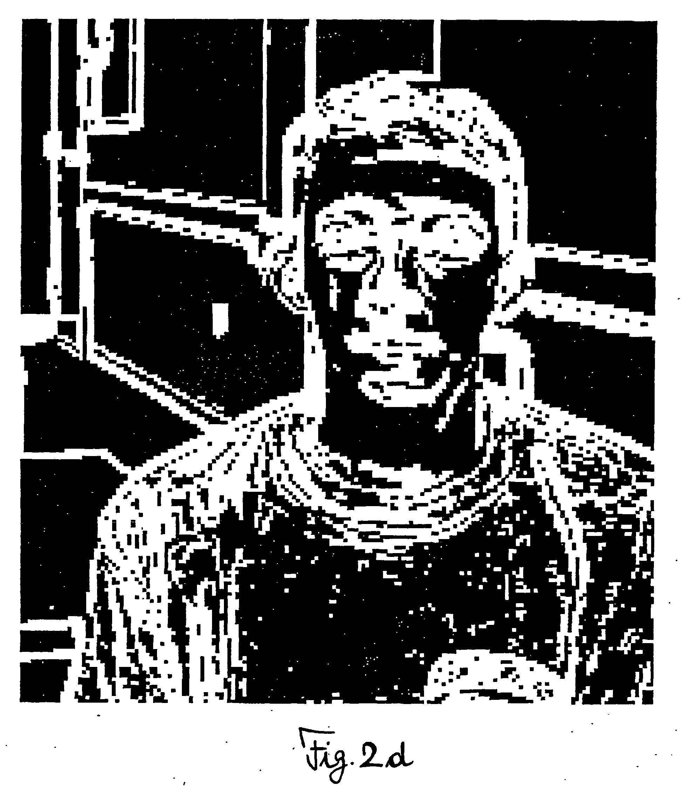

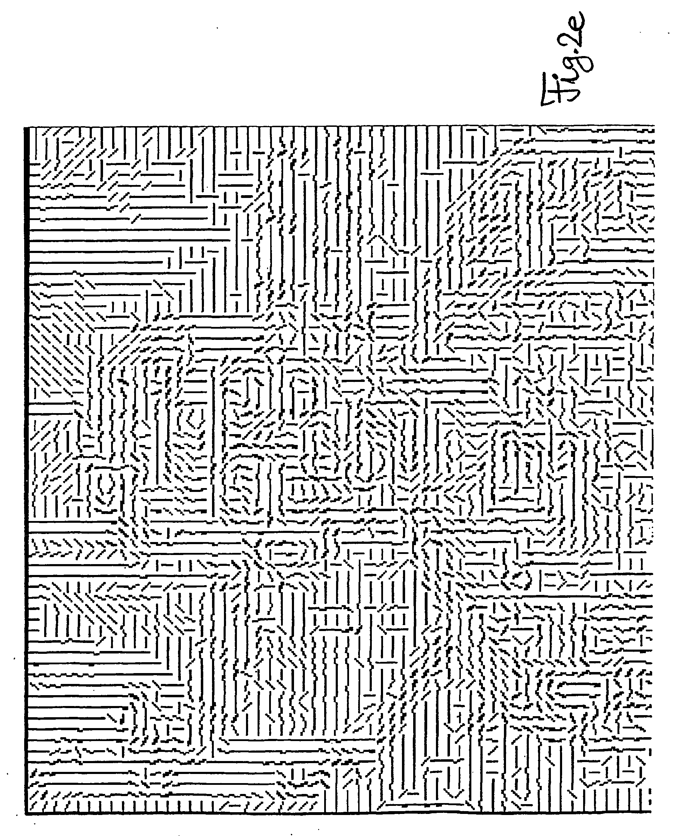

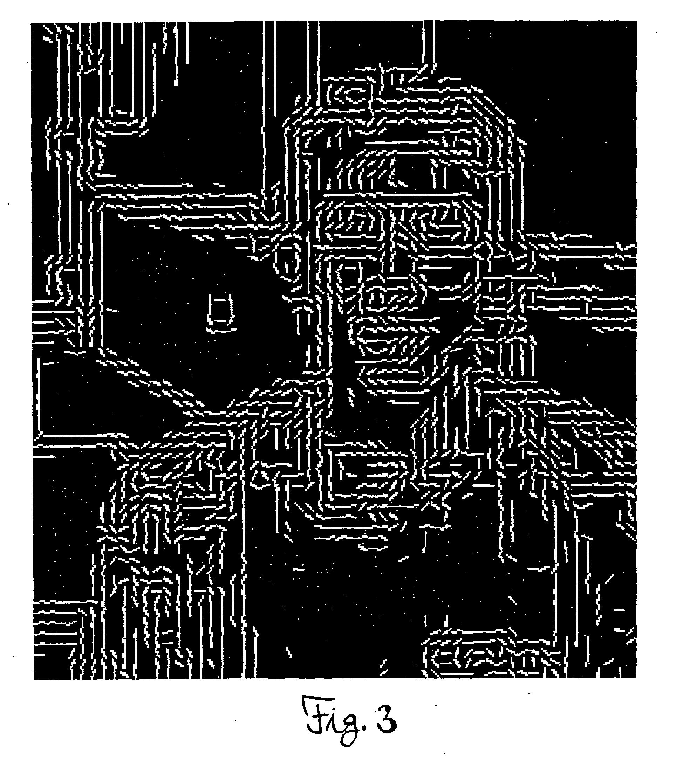

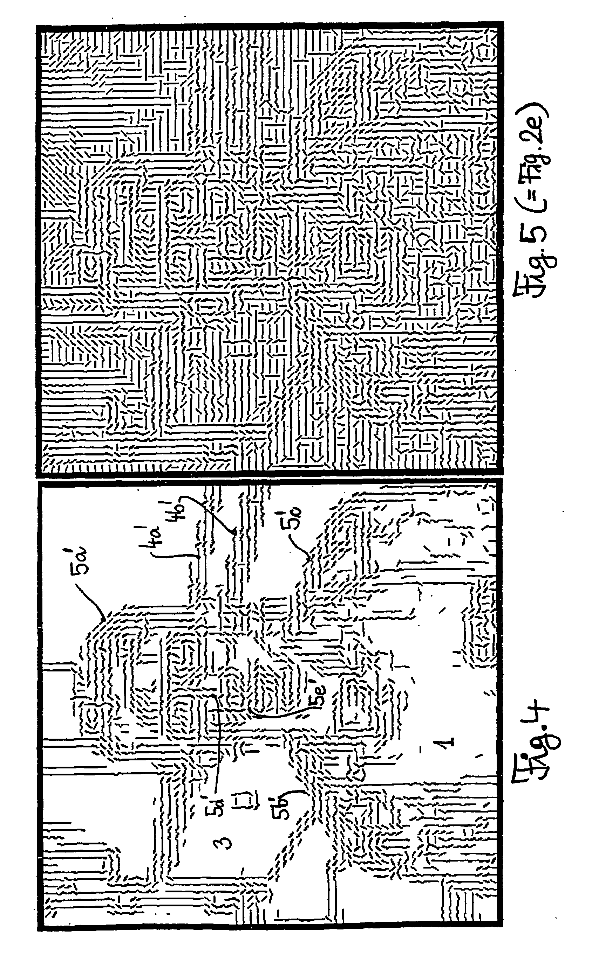

Eine direkte Gegenüberstellung der Figuren 3 und 2e in gleicher Darstellung zeigen die **Figuren 4 und 5**. Figur 3 ist hierbei invers als Figur 4 dargestellt, während Figur 5 der Figur 2e direkt entspricht.

In dem Bild der Figur 4 wird nun die gesamte Deutlichkeitsinformation neutralisiert, also beispielsweise sämtliche Vektoren auf eine gleiche Länge gesetzt. Erhalten bleibt die Richtungsinformation. In der Polarkoordinaten-Darstellung besitzt dann jedes Pixel des Bildes nach Figur 4 einen gleich langen, aber jeweils entsprechend der Richtung der Kante am Ort des Pixels unterschiedlich orientierten (gerichteten) Vektor. Nachdem der Längenwert des Vektors nicht weiter ausgewertete werden soll, kann die Länge auch auf Null gesetzt werden, wenn allein die Richtung für jedes Pixel beibehalten bleibt. Für die Darstellung ist es so vorgesehen, daß jeder seiner Richtung nach gezeigte Vektor eine Standardlänge von 6 Pixeln erhält.

Wann die Standardisierung der Vektorlängen letztlich erfolgt, ist Frage der konkreten Gestaltung des Programms. Solange die Deutlichkeitsinformation in den Vorstufen der Bildverarbeitung noch ausgewertet werden muß, kann sie nicht standardisiert werden. Figur 2e kann dabei unmittelbar aus Figur 2a gewonnen werden, wenn der eingangs beschriebene Sobel-Operator Verwendung findet. Parallel kann die Auswertung der Figur 2a über die Figuren 2b,2c und 2d erfolgen. Erfolgt eine solche Auswertung, kann der Längenwert des Vektors für die Figur 2e sofort auf einen Standardwert gesetzt werden, der in diesem Bild auch so dargestellt ist, daß jeder eingezeichnete Vektor eine Standardlänge von 6 Pixeln hat. Diese Pixel sind besonders bei den schräg verlaufenden Vektorlinien erkennbar.

An die Darstellung der Figur 4 (oder der Figur 3) schließt sich die Auswertung der jetzt reduzierten Information an. Die Information ist reduziert auf Bereiche mit hoher Deutlichkeit und besitzt hinsichtlich der verbleibenden Pixel an diesen Stellen jeweils alleinig Richtungsinformation. Zusätzliche Information könnte theoretisch ebenfalls gespeichert sein, wird aber in den folgenden Verfahrensschritten nicht mehr zur Auswertung herangezogen.

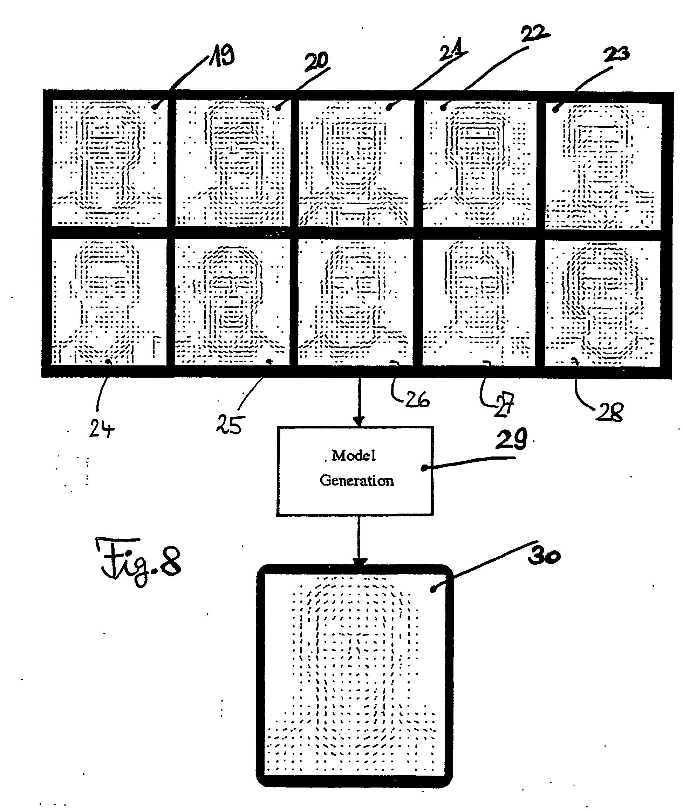

Es folgt ein Vergleich mit einem Modell 30 (auch: Modellbild). Dabei soll zunächst davon ausgegangen werden, das ein Modell existiert, daß Richtungsinformation enthält, die repräsentativ für einen bestimmten Typ einer Körperpartie ist, die in dem Kantenrichtungsbild mit reduzierter Information von Figur 4 gesucht wird. Ein Beispiel eines solchen Modells findet sich in Figur 8. Das dort gezeichnete Modell 30 enthält Richtungsinformation, die ähnlich reduziert ist, wie gemäß Figur 4 erläutert. Die Entstehung des Modells soll später erläutert werden.

Das Modell 30 wird im Verfahrensschritt 41 von Figur 1 mit dem ermittelten Bild der Figur 4 verglichen. Es soll angenommen werden, daß das Modell kleiner ist als das Bild. Beispielsweise umfaßt das Modell nur den Kopfbereich, während das Bild der Figur 4 mehr Anteile auch enthält. Das Modell wird im linken oberen Bereich der Figur 4 plaziert. Pixel für Pixel wird das Modell mit dem reduzierten Kantenbild verglichen. Dabei werden nur Richtungsinformationen verglichen.

Der Vergleich kann so gestaltet werden, daß Winkeldifferenzen an jeder Pixelstelle verglichen werden. Der Vergleich kann aus einer Differenzbildung bestehen. Für jedes Pixel wird dabei eine Differenz ermittelt und für die gesamte Fläche des Modells ergibt sich in Summe gesehen eine Winkelsumme, die maximal aus so vielen Winkeldifferenzen besteht, wie das Modell Pixel besitzt. Dieser Wert wird an einer Stelle des Speichers, die repräsentativ für die linke obere Ecke des Modells ist, abgespeichert. Anschließend wird das Modell um ein Pixel nach rechts verschoben. Anschließend erfolgt wiederum eine Summenbildung von allen Winkeldifferenzen im Modellbereich. Dieser Ähnlichkeitswert wird neben dem vorhergehenden Pixel abgespeichert. Ein weiterer Schritt entsprechend dem vorgenannten Schritt schließt sich an. Das Modell wird jetzt so lange über das Zielbild der Figur 4 geführt, bis es an jeder möglichen Stelle des Bildes einmal gelegen hat und ein Ähnlichkeitswert für jede mögliche Position des Modells im Zielbild errechnet und abgespeichert worden ist.

Es versteht sich, daß solche Ähnlichkeitswerte eine hohe Übereinstimmung andeuten, wenn die Winkeldifferenzen klein sind. Die Summe aus kleinen Winkeldifferenzen gibt insgesamt wiederum einen kleinen Wert, so daß der geringste Wert der Ähnlichkeit die höchste Übereinstimmung kennzeichnet. Darauf wird die Auswertung der Ähnlichkeitsermittlung ausgerichtet.

Ein Beispiel mag die Größenordnung zeigen. Das Modell kann z.B. 40 Pixel in der Vertikalerstreckung und 30 Pixel in der Horizontalerstreckung besitzen. Ein Gesamtbild gemäß Figur 4, das als Zielbild mit reduziertem Informationsgehalt angesehen wird, kann eine Breite und eine Höhe von jeweils 120 Pixel besitzen. Daraus entstehen 80 x 90 Positionen von Ähnlichkeitswerten, wobei jede Position einem Pixel entspricht.

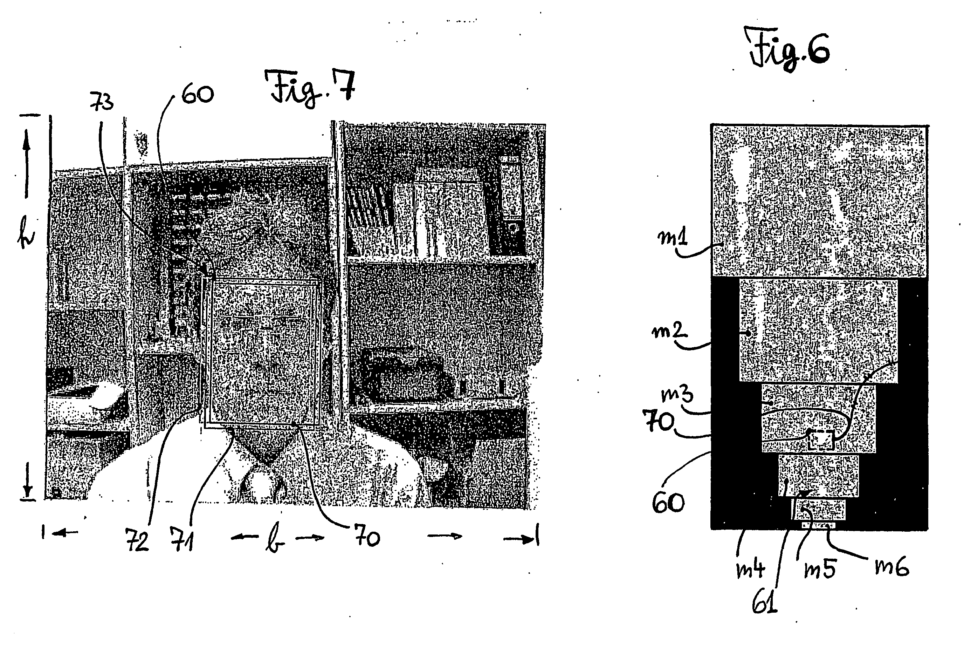

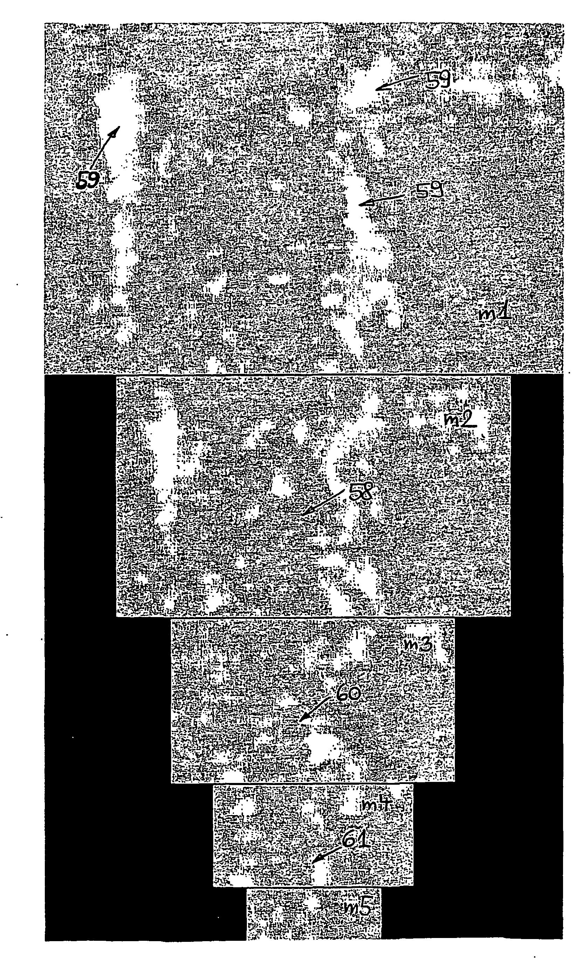

Bildlich kann der Ähnlichkeitswert durch eine Helligkeitsangabe dargestellt werden. Eine geringe Ähnlichkeit wird durch einen hohen Helligkeitswert von 255 dargestellt. Eine hohe Ähnlichkeit, also eine geringe Summe von Wnkeldifferenzen, hat einen geringen Wert nahe Null, entsprechend einem schwarzen Punkt. Eine sich daraus ergebende Darstellung für das Bild von **Figur 7**, entsprechend aufbereitet über die Vorgehensweise gemäß den Figuren 2a bis 2e, findet sich in den **Figuren 6 und 6a**. Bevor darauf eingegangen wird, soll die Winkeldifferenzbildung verdeutlicht werden.

Es kann bei dem reduzierten Informationsgehalt des Kantenbildes nach Figur 4 und einem entsprechend in seinem Informationsgehalt auch reduzierten Modell 30 dazu kommen, daß an einzelnen Pixeln bei einem Vergleich des Modells 30 mit dem Zielbild keine "Überlappung" festzustellen ist, also entweder das Zielbild an dem bezogenen Pixel keine Richtungsinformation besitzt oder das Modell an dem bezogenen Pixel keine Richtungsinformation besitzt. Dann wird die Winkeldifferenz auf einen maximalen Wert gesetzt, um eine Unähnlichkeit zu kennzeichnen.

Nimmt man Winkel und Winkeldifferenzen d zwischen 0° und 180° an, so ist der maximale Wert 180°. Eine gute Übereinstimmung zeigt gleiche Winkel zwischen den Richtungen an einem zu vergleichenden Pixel-Paar. Dann würde die Differenz d zu Null werden. Statt einer Winkeldifferenz kann auch eine trigonometrische Funktion verwendet werden, die nicht mehrdeutig im Bereich zwischen 0 und 180° ist. Die Funktion (1-cosα) sorgt bei Einsetzen einer Winkeldifferenz als Argument α für einen Ähnlichkeitswert 0 bei Winkelübereinstimmung und für einen Ähnlichkeitswert 1 bei maximaler Winkeldifferenz. Wird eine solche Funktion statt der bloßen Winkeldifferenzen gewählt, so beschränkt sich die Summierung der Ähnlichkeitswerte auf eine Summe von Werten zwischen 0 und 1.

Eine Berechnungsmöglichkeit der Richtungsdifferenz d (Winkelübereinstimmung) in einem Punkt ist unten (1) angegeben. Null (= 0) als Ergebnis heißt optimale Übereinstimmung der Richtungsinformation in dem betrachteten Punkt (Pixel).

$$d = \sin\left(\left|\varphi_m - \varphi_p\right|\right) \tag{1}$$

mit

$\varphi_m$:  Kantenrichtung im Modellpunkt

$\varphi_p$:  Kantenrichtung im kantenorientierten Zielbildpunkt.

Statt mit Werten zwischen 0° und 180° an den einzelnen Pixeln kann auch nur mit spitzen Winkeln gearbeitet werden, also solchen Winkeln, die zwischen 0° und 90° liegen. Dazu werden die Werte zwischen 90° und 180° umgerechnet in Werte zwischen 0° und 90°. Ein Richtungswert von 91 ° entspricht dann einem Wert von 89°. Ein Richtungswert von 180° entspricht einer guten Übereinstimmung, wie der Richtungswert von 0°. Im Ergebnis würde deshalb eine Differenzbildung noch hinzukommen, wenn der Winkelwert dann, wenn er oberhalb von 90° im Bereich zwischen 90° und 180° liegt, von 180° subtrahiert wird. Entsprechend kann auch das Modell ausgestaltet sein, das dann nur Informationen über spitze Winkel enthält, die zwischen 0° und 90° liegen. Der Vergleich würde sich vereinfachen. Es können so nicht nur Arten von Cosinus-Funktionen, sondern auch Sinus- und Tangens-Funktionen Verwendung finden.

Im beschriebenen Beispiel der Bildgröße und der Modellgröße ergeben sich 7200 Winkeldifferenzsummen (Ähnlichkeitswerte), die zusammen eine neue Matrix bilden, die in Figur 6 als m1 flächig abgebildet ist. Die dargestellte Fläche m1 entspricht der Fläche des Bildes von Figur 7. Diese umgewandelte Bilddarstellung wird jetzt auf ein Minimum ausgewertet, zur Ermittlung der Position des Modells auf dem Zielbild der Figur 4, an dem die beste Übereinstimmung erzielt worden war. Das entspricht einer Minimalwertsuche an allen 7.200 Punkten. Nur dann, wenn ein Gesicht als Beispiel einer Körperpartie gesucht wird, also kein Vorab-Wissen vorhanden ist, muß ein Schwellenwert hinzugenommen werden, um dem minimalen Wert einen Sinn zu geben. Es können auch mehrere Minima auftreten, wenn mehrere Gesichter auf dem Zielbild vorhanden sind. Anhand der Position des Pixels, bei dem das Minimum auftritt, kann die Positionsinformation gegeben werden. Abhängig davon, ob der Übereinstimmungswert im linken oberen Eck des Modells oder in der Mitte oder an einer anderen Stelle gespeichert wurde, kann durch eine einfache Berechnung die genaue Lage des Modells 30 im Zielbild angegeben werden. Die Angabe erfolgt entweder durch Angabe der Mitte und der Größe oder durch Angabe der Eckpunkte.

Soll bei der reduzierten Anzahl von Ähnlichkeitsdaten (Winketdifferenzen) ein jeweiliger Ähnlichkeitswert für eine lokale Zuordnung von Modellbild und Kantenbild gemäß Figur 4 verwendet werden, kann eine Einschränkung des Umfangs der Summation der einzelnen Winkeldifferenzen (oder trigonometrischen Umsetzung) eingesetzt werden. Als Beispiel bieten sich die besten Werte an, die Verwendung finden. Die weniger guten Werte, brauchen nicht zur Verschlechterung des Ähnlichkeitswerts noch zusätzlich herangezogen werden. So bietet es sich an, von beispielsweise 120 verfügbaren Werten, nur 80 zu verwenden. Es können deshalb bevorzugt nur 2/3 der vorhandenen Werte zur Summenbildung und zum Entstehen eines Ähnlichkeitswerts verwendet werden, wobei die minimalsten Werte im oben beschriebenem Sinn verwendet werden. Minimal ist so zu verstehen, daß es die besten Übereinstimmungswerte sind. Ist eine entsprechende Invertierung programmgemäß vorgesehen, ist das zuvor gesagt entsprechend umzusetzen.

Erwähnt sein sollte, daß die Differenzbildung entweder durch ein Skalarprodukt oder Differenzbildung der Winkel in einer Polarkoordinaten-Darstellung geschehen kann, wie oben gezeigt.

Durch Wahl des Modells wird der Typ der Körperpartie ausgewählt, der in dem Zielbild zu ermitteln ist.

Soll neben der Positionsinformation auch eine Größeninformation gegeben werden, kann das Modell in seiner Größe relativ zum Zielbild der Figur 4 verändert werden. Alternativ kann auch die Figur 4 in ihrer Größe verkleinert oder vergrößert werden, bei einer gleichbleibenden Größe des Modells 30. Für jede gewählte Modellgröße oder für jede gewählte Zielbildgröße wird einmal das zuvor beschriebene Verfahren durchgeführt. Aus mehrere Schritten ergeben sich dann mehrere Bilder m1, m2, m3, m4, m5, m6 gemäß Figur 6, wobei jedes dieser Bilder für eine Modellgröße steht und eine Abbildung aller Ähnlichkeitswerte der jeweiligen Vergleiche des Modells mit dem Zielbild repräsentiert. Die Veränderung der Modellgröße kann mit einem kleinen Raster erfolgen, beispielsweise mit einem Faktor zwischen 1,1 und 1,4, bevorzugt zwischen 1,2 und 1,3, um keine zu großen Sprünge im Ähnlichkeitswert zu haben.

Das Ausgangsbild der **Figur 7**, zunächst ohne die eingezeichneten Rahmen 60, 73, 71, 72 und 70 ist nach dem zuvor beschriebenen Verfahren ausgewertet worden. Das Grauwertbild hat eine Höhe h und eine Breite b. Entsprechend dem zuvor beschriebenen Verfahren ist für dieses Bild eine Matrix an Ähnlichkeitswerten ermittelt worden, wie sie in Figur 6a für das erste Teilbild m1 visualisiert ist. Hier sind mehrere weiße Stellen deutlich zu erkennen, die mit 59 bezeichnet sind. In diesen Bildbereichen lagen die geringsten Übereinstimmungen vor.

Nach Erstellung des ersten Ähnlichkeitsbildes m1 wird mit einem vergrößerten Modell gearbeitet. Es ergibt sich daraus die Matrix m2, die im Bereich 58 einen dunkleren Fleck erkennen läßt. Die Rasterung der Darstellung der Figur 6a gibt jeweils die relativen Lagen wieder, für die jeweils Ähnlichkeitswerte festgestellt worden sind. Jedes Pixel entspricht einer bestimmten Lage des Modells relativ zum Kantenrichtungsbild entsprechend der Figur 4, nur hier bezogen auf eine andere Darstellung der Figur 7.

Eine weitere Vergrößerung des Modells führt zu dem Ergebnis m3, bei der die Position 60 noch deutlicher wird. Hier ist die größte Übereinstimmung dort zu erkennen, wo der geringste Wert an Winkelsummen entstanden ist und mithin eine dunkle Stelle nahe dem Wert Null sich ergibt. In der Figur 6 ist dieser Bereich so eingezeichnet, wie der Rahmen 60 von Figur 7, namentlich das mit dem Verfahren lokalisierte Gesicht. Bei einer weiteren Erhöhung der Größe des Modells ist in Folge die Matrix gemäß m4, gemäß m5 und gemäß m6 entstanden. Die schwarzen stufigen Ränder erklären sich daraus, daß ein größer gewordenes Modell weniger Ergebnispunkte bei einem in der Größe gleichbleibenden Zielbild mit der Fläche b x h ergibt. Das gilt sowohl in vertikaler wie auch in horizontaler Richtung.

Die in Figur 7 eingezeichneten Rahmen sind unterschiedliche Rahmen, die aufgrund von mehreren Pixeln entstehen, die nahe dem Minimalwert sind. Der Rahmen 60 kennzeichnet sowohl die Position, wie auch die Größe der aufgefundenen Gesichtspartie, wobei sich die Größe aus dem Modell ergibt, das die Ergebnismatrix m3 erbrachte und die Position sich aus der dunklen Stelle 60 dieser Matrix ergibt.

Die Modellbildung war zuvor angesprochen, aber zurückgestellt worden. Die Modellbildung kann in gleicher Weise erfolgen wie die Entstehung des Bildes nach Figur 4. Die Schwelle, die dort angesprochen ist, darf für die Bildung des Modells nicht Null sein. Es wird eine Binarisierung durchgeführt, und es wird nur Richtungsinformation für das Modell gespeichert. Das Modell kann dabei aus einem einzelnen Bild gebildet werden. Das Modell kann aber auch gemäß **Figur 8** so entstehen, daß eine Vielzahl von Bildern 19 bis 28 verwendet werden, die eine Stichprobe bilden. Alle diese Bilder stellen natürliche Gesichter dar, hier als Beispiel für eine beliebige Körperpartie.

Jedes dieser Bilder ist im beschriebenen Verfahren so entstanden, wie das Bild nach Figur 4. Im Verfahrensschritt der Modellerzeugung 29 werden diese Bilder zusammengefaßt. Das kann durch eine Mittelwertbildung erfolgen, bezogen auf jeweilige Winkel an den jeweiligen Pixelstellen. Um diese Bilder in der Modellerzeugung aber vergleichen zu können, sollten charakteristische Stellen, wie Augen, Nase und Mund an den gleichen Stellen liegen, also insoweit eine Ähnlichkeit der Größenverhältnisse der Bilder gegeben sein.

Der Anwendungsbereich der beschriebenen Methoden bezieht sich sowohl auf die Gesichtsfindung, wie auch auf die Feststellung, ob überhaupt ein Gesicht auf dem Zielbild vorhanden ist. Statt eines Gesichtes können auch andere Körperteile, Hände, Beine oder ganze Personen lokalisiert werden. Diese Lokalisierung kann aufgrund der schnellen Berechnung sowohl in Standbildem, wie auch in Bewegtbildern erfolgen. In Bewegtbildern kann ein Objekt entsprechend seiner Bewegung nachgeführt werden. Bei der Nachführung und bei einer Bewegung des gesuchten Objektes in eine entferntere und eine nähere Richtung, kann auch die Größeninformation nachgeführt werden.

**Patentansprüche**

1. **Verfahren zur Erkennung** von Typen von physisch abgegrenzten Körperpartien (2), wie Gesichtern, Händen, Beinen, eines in einem Zielbild (5) bildlich dargestellten Subjekts (1), wobei auf dem Zielbild (5) zumindest eine

   - noch nicht erkannte - Körperpartie (2) vor einem Hintergrund (3) abgebildet ist und ihre Position **dadurch** lokalisiert wird, dass zumindest Positionsinformationen ermittelt und festgehalten werden;

   *dadurch gekennzeichnet, das*

   (a) das Zielbild (5) in zumindest eine Zwischenabbildung in Form eines Kantenstärkenbildes (Fig. 2b,2c) umgesetzt wird, auf dem Randlinien (5a,5b,5c) hervorgehoben sind, welche hervorgehobenen Randlinien in einem Folgeschritt zumindest hinsichtlich ihrer Richtungen ausgewertet werden (Fig. 2e,4);
   (b) ein Modell (Fig. 8,30) bereitgestellt wird, das aus anderen Randlinieninformationen zuvor so gebildet wurde, daß die Richtungen der Randlinien im Modell enthalten sind, welches Modell bzw. welche anderen Randlinieninformationen dem zu erkennenden Typ von Körperpartie (2) entsprechen;

   wobei nur Randlinienrichtungen zumindest von der einen abgebildeten Körperpartie in einem Vergleich mit dem Modell (30) ausgewertet werden, um zu ermitteln, ob die vor dem Hintergrund (3) abgebildete Körperpartie (2) dem Typ der zu erkennenden Körperpartien entspricht und zugehörige Positionsinformationen ermittelt und festgehalten werden.

2. Verfahren nach Anspruch 1, wobei mehrere Körperpartien abgebildet und nacheinander anhand ihrer Randlinieninformation mit dem zu ermittelnden Typ von Körperpartien verglichen werden.

3. Verfahren nach Anspruch 1, wobei die Positionsinformationen Daten zur Position der zu erkennenden Körperpartie im Ziel-Grauwertbild (5) enthalten.

4. Verfahren nach Anspruch 1, wobei sowohl erste Randlinien (5d,5e; 5d',5e') innerhalb der zumindest einen abgebildeten Körperpartie (2), wie auch die Randlinie (5a,5a') der zumindest einen abgebildeten und physisch abgegrenzten Körperpartie (2) verwendet werden.

5. Verfahren nach Anspruch 1, bei dem die bildliche Darstellung ein Szenenbild mit unterschiedlichen - aber lokal unveränderlichen - Intensitäten ist, das als nicht bewegtes Standbild vorliegt, insbesondere in digitaler Form als pixelorientierte, Intensitätsstufen enthaltende Repräsentation.

6. Verfahren nach Anspruch 1, bei dem als bildliche Darstellung ein Szene mit lokal wechselnden Intensitätswerten vorliegt, die zumindest ein bewegtes Subjekt (1) vor dem Hintergrund (3) zeigt und sich abhängig von der Zeit die relative Lage der zumindest einen abgebildeten Körperpartie in ihrer Position oder ihrer Orientierung relativ zum Hintergrund verändert.

7. Verfahren nach Anspruch 1, wobei die Randlinieninformationen als "Kanteninformation" Daten zur Orientierung, insbesondere zum Verlauf, von durch dreidimensionale Kanten des Subjekts (1) im 2D-Intensitätsbild (5) gebildeten Linien enthalten.

8. Verfahren nach Anspruch 1, wobei die Hervorhebung der Randlinien aus einer Auswertung des Intensitätsunterschiedes (Kontrast) von zwei angrenzenden Bildbereichen erfolgt, insbesondere mit einem Sobel-Operator als hochpaßähnlicher Flächenfilter.

**9.** Verfahren nach Anspruch 1, wobei ein durch das Modell (30) vorgegebener Typ von Körperpartien vor dem Hintergrund (3) auf der bildlichen Darstellung (5) aufgefunden wird und als Ergebnis der Auffindung eine binäre Antwort zur Verfügung gestellt wird, wonach der Typ von Körperpartien, welcher der Modellvorgabe entspricht, auf der bildlichen Darstellung befindlich ist oder nicht, um eine Aussage zum Vorhandensein zumindest einer solchen Körperpartie zu geben (Detektion).

**10.** Verfahren nach Anspruch 1, wobei das Grauwertbild (5) ein Farb- oder Farbkomponentenbild ist, insbesondere im sichtbaren oder nicht sichtbaren Wellenlängenbereich.

**11.** Verfahren nach Anspruch 1, wobei zu den Positionsinformationen auch eine Größeninformation der Körperpartie ermittelt und festgehalten wird, insbesondere gespeichert wird.

**12.** Verfahren nach Anspruch 11, wobei die Größeninformation bereitgestellt wird, durch ein relatives Verändern der Größe des Modells (30) zur Größe des Zielbildes (5) sowie einen Vergleich bei jeweils einer der verschiedenen Größenrelationen, zur Ermittlung eines jeweiligen Übereinstimmungswertes für jede Größenrelation von Zielbild und Modell, sowie unter Herausgreifen des besten Übereinstimmungswertes für die Ermittlung der Größeninformation.

**13.** Verfahren nach Anspruch 1, wobei die hinsichtlich der Richtung ausgewertete Zwischenabbildung (Fig. 2e, Fig. 4) mit dem Modell (30) durch Bilden mehrerer Summen von am Winkel orientierten Ähnlichkeitswerten verglichen wird, insbesondere unter Bildung einer jeweiligen Summe von Winkeldifferenzen zwischen Randlinienabschnitten von Modell und der hinsichtlich der Richtungen ausgewerteten Zwischenabbildung (Fig. 2e, Fig. 4).

**14.** Verfahren nach Anspruch 13, wobei ein Schwellenwert bereitgestellt wird, der mit allen über das Zielbild verteilten Ähnlichkeitswerten verglichen wird, um nur dann auf das Vorhandensein einer gesuchten Körperpartie (2) im Zielbild zu schließen, wenn ein dem Schwellenwert entsprechender Mindestwert an zumindest einer Stelle des Bildes unterschritten ist.

**15.** Verfahren nach Anspruch 1, wobei die Randlinien (5d,5e) der bildlichen Darstellung nur nach Linienrichtung (5a', 4a',4b',5c') ausgewertet werden, und durch einen Vergleich mit dem Modell (30) ermittelt wird, ob die abgebildete Körperpartie (2) dem durch das Modell vorgegebenen Typ von Körperpartien entspricht, wobei zumindest Randlinienrichtungen (5d',5e') innerhalb der zumindest einen abgebildeten Körperpartie und Randlinienrichtungen (5a) der zumindest einen abgebildeten und physisch abgegrenzten Körperpartie verwendet werden, womit sie hinsichtlich ihrer Position lokalisiert wird und zugehörige Positionsinformationen festgehalten werden.

**16.** Verfahren nach Anspruch 1, wobei zur Vorbereitung ein Arbeitsbild durch Berechnungen erstellt wird, bei welchen Berechnungen

(a) die bildliche Darstellung (5) in eine weitere Darstellung (Fig. 2b) umgerechnet wird, die Daten zur Richtung der Randlinien aufweist und für jede Richtung ein Deutlichkeitswert angegeben ist;
(b) die weitere Darstellung mit einem Schwellenwert flächig bearbeitet wird (Fig. 2c), um Richtungsdaten an den Stellen (1) der weiteren Darstellung zu unterdrücken, an denen der Deutlichkeitswert unter dem Schwellenwert liegt, so dass eine reduzierte Richtungsinformation (5a',5b') in dem Arbeitsbild (Fig. 3, Fig. 4) verbleibt;

wobei das Arbeitsbild als Modellbild (30) oder als Zielbild (Fig. 4) verwendet wird.

**17.** Verfahren nach Anspruch 16, wobei die verbliebene Richtungsinformation im Arbeitsbild unverändert bleibt, aber die Deutlichkeitswerte für alle verbliebenen Richtungen auf einen Standardwert gesetzt werden, um die Deutlichkeitsinformation zu neutralisieren.

**18.** Verfahren nach Anspruch 17, wobei in dem Folgeschritt die verbliebene Information (die verbliebenen Richtungen) durch Anwenden des Modellbildes (30) einer Körperpartie ausgewertet wird und die dargestellte Körperpartie hinsichtlich ihrer Position lokalisiert wird, wobei Positionsinformationen festgehalten werden.

**19.** Verfahren nach Anspruch 16, wobei die mit dem Schwellenwert flächig bearbeitete weitere Darstellung mit einem Binäroperator flächig bearbeitet wird, um ein Schablonenbild (Fig. 2d) zu erhalten, das mit der weiteren Darstellung flächig verknüpft wird.

**20.** Verfahren nach Anspruch 13, wobei bei der Bildung der mehreren Summen von Ähnlichkeitswerten nur eine eingeschränkte Zahl von Summanden verwendet wird, jeweils bei einer relativen Lage von Modell (30) und hinsichtlich der Richtungen ausgewerteten Zwischenabbildung (Fig. 4), insbesondere unter 80% der für eine jeweilige relative Lage verfügbaren Summanden, wobei die als Summanden zur Bildung des Ähnlichkeitswertes verwendeten einzelnen Ähnlichkeitsdaten diejenigen mit den besten Ähnlichkeitsdaten sind.

**21.** Verfahren nach Anspruch 13 oder 20, wobei zur Bildung von Winkeldifferenzen nur spitze Winkel verglichen werden, wobei Winkel zwischen 90° und 180° in entsprechende Winkel zwischen 90° und 0° umgesetzt werden, bevor sie mit den Winkeln des Modells verglichen werden.

**22.** Verfahren nach Anspruch 21, wobei das Modell (30) nur Winkel zwischen 0° und 90° als Richtungen der im Modell enthaltenen Randlinien enthält.

**23.** Verfahren nach Anspruch 1, zur Lokalisierung zumindest der einen physisch abgegrenzten Körperpartie, wie Gesicht, Hand, Bein, des bildlich dargestellten Subjekts,
wobei zumindest ein Teil der hervorgehobenen Randlinien (Fig. 4) nach ihren Richtungen (5a',4a',4b',5c') durch **wiederholte Vergleiche** mit dem Modellbild (30) ausgewertet werden, wobei jeder Vergleich in einer anderen lokalen Zuordnung von Modellbild (30) und dem Teil der hervorgehobenen Randlinien (Fig. 4) stattfindet, wodurch jeweils ein Ähnlichkeitswert für jede lokale Zuordnung gebildet wird; und wobei
ein größter Ähnlichkeitswert aus den mehreren Ähnlichkeitswerten der Vergleiche ausgewählt wird, womit die Position der abgebildeten Körperpartie lokalisiert wird und eine zugehörige Positionsinformation festgehalten wird.

**24.** Verfahren nach Anspruch 23, wobei der Teil der hervorgehobenen Randlinien (Fig. 4) eine Zwischenabbildung ist und der lokale Ähnlichkeitswert einer lokalen Zuordnung durch Summieren von am Winkel der Randlinien orientierten einzelnen Ähnlichkeitsdaten bestimmt wird, insbesondere

- unter Bildung einer Summe von Winkeldifferenzen zwischen Randlinienabschnitten des Modellbildes (30) und der Zwischenabbildung (Fig. 2e, Fig. 4) über zumindest einen wesentlichen Flächenbereich des Modellbildes (30); oder
- unter Bildung von Winkeldifferenzen zwischen Randlinienabschnitten des Modellbildes (30) und der Zwischenabbildung (Fig. 2e, Fig. 4), anschließender trigonornetrischer Umformung und Summieren der sich ergebenden Ähnlichkeitsdaten zu dem Ähnlichkeitswert.

**25.** Verfahren nach Anspruch 23, wobei ein Schwellenwert bereitgestellt wird, der mit allen über die Fläche der bildlichen Darstellung (5) verteilten Ähnlichkeitswerten verglichen wird, um nur dann auf das Vorhandensein einer gesuchten Körperpartie (2) zu schließen, wenn ein dem Schwellenwert entsprechender Mindestwert an zumindest einer Stelle unterschritten ist.

**26.** Verfahren nach Anspruch 23, wobei ein Ähnlichkeitswert für eine jeweilige lokale Zuordnung nur unter Verwendung von solchen am Winkel orientierten einzelnen Ähnlichkeitsdaten bestimmt wird, bei denen sowohl für das Modellbild (30), wie auch für die Zwischenabbildung (Fig. 2e) ein Richtungswert an derselben Stelle vorhanden ist, und wobei an denjenigen Stellen, wo in zumindest einem der beiden Bilder (Fig. 2e,30) kein Winkel als Richtungsinformation vorliegt, kein Beitrag zu dem für diese lokale Zuordnung bestimmten Ähnlichkeitswert erfolgt.

**27.** Verfahren nach Anspruch 24, wobei die Ähnlichkeit umso besser oder höher ist, je geringer der lokale Ähnlichkeitswert ist.

**Claims**

**1.** Process for recognising types of physically delimited body parts (2), such as faces, hands, legs, of a subject (1) represented pictorially in a target image (5), wherein at least one - not yet recognised - body part (2) is reproduced on the target image (5) against a background (3) and its position is localised in that at least positional information is determined and recorded;
**characterised in that**

(a) the target image (5) is converted into at least one intermediate image in the form of a boundary thickness image (Figure 2b, 2c), on which edge lines (5a, 5b, 5c) are emphasised, which emphasised edge lines are evaluated in a subsequent step at least with regard to their directions (Figure 2e, 4);

(b) a model (Figure 8, 30) is provided, which has been formed beforehand from other edge line information so that the directions of the edge lines are present in the model, which model or which other edge line information corresponds to the type of body parts (2) to be recognised;

wherein only edge line directions at least of the one reproduced body part are evaluated in a comparison with the model (30) in order to determine whether the body part (2) reproduced against the background (3) corresponds to the type of body parts to be recognised and associated positional information is determined and recorded.

2. Process according to claim 1, wherein several body parts are reproduced and compared one after another, using their edge line information, with the type of body parts to be determined.

3. Process according to claim 1, wherein the positional information contains data regarding the position of the body part to be recognised in the target half-tone image (5).

4. Process according to claim 1, wherein both first edge lines (5d, 5e; 5d', 5e') are used within the at least one reproduced body part (2), and also the edge line (5a, 5a') of the at least one reproduced and physically delimited body part (2).

5. Process according to claim 1, in which the pictorial representation is a scenic image having different - but locally unchangeable - intensities, which exists as a non-moved still image, in particular in digital form as a pixel-orientated representation containing intensity stages.

6. Process according to claim 1, in which as a pictorial representation, a scene having locally changing intensity values exists, which shows at least one moved subject (1) against the background (3) and is changed depending on the time, the relative position of the at least one reproduced body part in its position or its orientation relative to the background.

7. Process according to claim 1, wherein the edge line information as "boundary information" contains data regarding orientation, in particular for the course, of lines formed by three-dimensional boundaries of the subject (1) in the 2D intensity image (5).

8. Process according to claim 1, wherein the emphasising of the edge lines from an evaluation of the intensity difference (contrast) of two adjacent image regions takes place, in particular using a Sobel operator as a type of high pass planar filter.

9. Process according to claim 1, wherein one type of body parts preset by the model (30) is discovered against the background (3) on the pictorial representation (5) and a binary response is made available as a result of the discovery, whether the type of body parts, which corresponds to the model default, can be found on the pictorial representation or not in order to give a statement regarding the presence of at least one such body part (detection).

10. Process according to claim 1, wherein the half-tone image (5) is a colour or colour component image, in particular in the visible or non-visible wavelength range.

11. Process according to claim 1, wherein for the positional information, size information of the body part is also determined and recorded, in particular is stored.

12. Process according to claim 11, wherein the size information is provided by a relative change of the size of the model (30) with respect to the size of the target image (5) and a comparison for in each case one of the different size relationships, to determine a particular agreement value for each size relationship of target image and model, and while selecting the best agreement value for determination of the size information.

13. Process according to claim 1, wherein the intermediate image (Figure 2e, Figure 4) evaluated with regard to the direction is compared with the model (30) for forming several sums of angle-orientated similarity values, in particular with formation of a particular sum of angular differences between edge line sections of model and the intermediate image (Figure 2e, Figure 4) evaluated with regard to the directions.

14. Process according to claim 13, wherein a threshold value is provided, which is compared with all similarity values distributed over the target image in order to decide only then on the presence of a body part (2) sought in the target image, when a minimum value corresponding to the threshold value is not reached at least at one point of the image.

**15.** Process according to claim 1, wherein the edge lines (5d, 5e) of the pictorial representation are only evaluated according to line direction (5a', 4a', 4b', 5c'), and it is determined by a comparison with the model (30) whether the reproduced body part (2) corresponds to the type of body parts preset by the model, wherein at least edge line directions (5d', 5e') within the at least one reproduced body part and edge line directions (5a) of the at least one reproduced and physically delimited body part are used, with which it is localised with regard to its position and associated positional information is recorded.

**16.** Process according to claim 1, wherein for initialisation, a working image is established by calculations, in which calculations

(a) the pictorial representation (5) is converted into a further representation (Figure 2b), which has data regarding the direction of the edge lines and a clarity value is indicated for each direction;
(b) the further representation is processed in planar manner using a threshold value (Figure 2c) in order to suppress directional data at the points (1) of the further representation, at which the clarity value lies below the threshold value, so that reduced directional information (5a', 5b') remains in the working image (Figure 3, Figure 4);

wherein the working image is used as a model image (30) or as a target image (Figure 4).

**17.** Process according to claim 16, wherein the remaining directional information in the working image remains unchanged, but the clarity values for all remaining directions are set to a standard value in order to neutralise the clarity information.

**18.** Process according to claim 17, wherein in the subsequent step, the remaining information (the remaining directions) is evaluated by using the model image (30) of a body part and the body part represented is localised with regard to its position, wherein positional information is recorded.

**19.** Process according to claim 16, wherein the further representation processed in planar manner using the threshold value is processed in planar manner using a binary operator, in order to obtain a template image (Figure 2d), which is linked in planar manner with the further representation.

**20.** Process according to claim 13, wherein during formation of the several sums of similarity values, only a restricted number of summands is used, in each case at a relative position of model (30) and with regard to the directions of evaluated intermediate image (Figure 4), in particular below 80% of the summands available for a particular relative position, wherein the individual similarity data used as summands for the formation of the similarity value are those having the best similarity data.

**21.** Process according to claim 13 or 20, wherein to form angular differences, only acute angles are compared, wherein angles between 90° and 180° are converted into corresponding angles between 90° and 0° before they are compared with the angles of the model.

**22.** Process according to claim 21, wherein the model (30) only contains angles between 0° and 90° as directions of the edge lines present in the model.

**23.** Process according to claim 1, for localisation of the at least one physically delimited body part, such as face, hand, leg, of the pictorially represented subject, wherein at least one part of the emphasised edge lines (Figure 4) are evaluated according to their directions (5a', 4a', 4b', 5c') by repeated comparisons with the model image (30), wherein each comparison takes place in a different local assignment of model image (30) and the part of the emphasised edge lines (Figure 4), as a result of which in each case a similarity value is formed for each local assignment; and wherein a largest similarity value is selected from the several similarity values of the comparisons, with which the position of the reproduced body part is localised and associated positional information is recorded.

**24.** Process according to claim 23, wherein the part of the emphasised edge lines (Figure 4) is an intermediate image and the local similarity value of a local assignment is determined by summation of individual similarity data orientated to the angle of the edge lines, in particular

- with formation of a sum of angular differences between edge line sections of the model image (30) and the intermediate image (Figure 2e, Figure 4) over at least a considerable surface region of the model image (30); or
- with formation of angular differences between edge line sections of the model image (30) and the intermediate image (Figure 2e, Figure 4), subsequent trigonometric conversion and summation of the similarity data being produced to form the similarity value.

25. Process according to claim 23, wherein a threshold value is provided, which is compared with all similarity values distributed over the surface of the pictorial representation (5) in order to decide only then on the presence of a sought body part (2) when a minimum value corresponding to the threshold value is not reached at least at one point.

26. Process according to claim 23, wherein a similarity value for a particular local assignment is determined only using such angle-orientated individual similarity data, for which a directional value is present at the same point both for the model image (30) and for the intermediate image (Figure 2e), and wherein at those points where there is no angle as directional information at least in one of the two images (Figure 2e, 30), no contribution to the similarity value determined for this local assignment takes place.

27. Process according to claim 24, wherein the similarity is better or greater, the lower the local similarity value.

## Revendications

1. Procédé de reconnaissance de types de parties de corps (2) délimitées physiquement, telles que visages, mains, jambes, d'un sujet (1) représenté figurativement dans une image visée (5), au moins une partie de corps (2)

   - non encore reconnue - étant reproduite sur l'image visée (5) devant un fond (3) et sa position étant localisée par le fait qu'au moins des informations de position sont déterminées et conservées,

   **caractérisé en ce que**

   (a) on convertit l'image visée (5) en au moins une reproduction intermédiaire sous la forme d'une image d'intensités d'arêtes (figures 2b, 2c) sur laquelle des contours (5a, 5b, 5c) sont accentués, lesquels contours accentués sont évalués dans une étape suivante au moins quant à leurs directions (figures 2e, 4) ;
   (b) on fournit un modèle (figures 8, 30) qui a été formé préalablement à partir d'autres informations de contours de telle sorte que les directions des contours sont contenues dans le modèle, lequel modèle ou lesquelles autres informations de contours correspondent au type à reconnaître de parties de corps (2) ;

   seules des directions de contours au moins de la partie de corps reproduite étant évaluées dans une comparaison avec le modèle (30) pour déterminer si la partie de corps (2) reproduite devant le fond (3) correspond au type des parties de corps à reconnaître et si des informations de position associées sont déterminées et conservées.

2. Procédé selon la revendication 1, dans lequel on reproduit plusieurs parties de corps et on les compare successivement à l'aide de leur information de contours au type à déterminer de parties de corps.

3. Procédé selon la revendication 1, dans lequel les informations de position contiennent des données pour la position de la partie de corps à reconnaître dans l'image visée à valeurs de gris (5).

4. Procédé selon la revendication 1, dans lequel on utilise aussi bien des premiers contours (5d, 5e ; 5d', 5e') à l'intérieur de la ou des parties de corps reproduites (2) que le contour (5a, 5a') de la ou des parties de corps (2) reproduites et délimitées physiquement.

5. Procédé selon la revendication 1, dans lequel la représentation figurative est une image de scène avec différentes intensités - mais invariables localement - qui est présente sous la forme d'une image immobile non animée, notamment sous une forme numérique comme représentation avec pixels et niveaux d'intensité.

6. Procédé selon la revendication 1, dans lequel la représentation figurative est une scène avec des valeurs d'intensité variables localement qui montre au moins un sujet animé (1) devant le fond (3) et dans laquelle la situation relative de la ou des parties de corps reproduites varie quant à sa position ou à son orientation par rapport au fond en fonction du temps.

**7.** Procédé selon la revendication 1, dans lequel les informations de contours contiennent comme "information d'arêtes" des données concernant l'orientation, notamment l'allure, de lignes formées par des arêtes tridimensionnelles du sujet (1) dans l'image d'intensités 2D (5).

**8.** Procédé selon la revendication 1, dans lequel l'accentuation des contours s'effectue à partir d'une évaluation de la différence d'intensité (contraste) entre deux zones d'image adjacentes, notamment avec un opérateur de Sobel comme filtre de surface analogue à un passe-haut.

**9.** Procédé selon la revendication 1, dans lequel on cherche un type de parties de corps prescrit par le modèle (30) devant le fond (3) sur la représentation figurative (5) et on fournit comme résultat de la recherche une réponse binaire indiquant si le type de parties de corps qui correspond à la prescription de modèle se trouve ou ne se trouve pas sur la représentation figurative afin de donner un renseignement concernant la présence d'au moins une partie de corps de ce type (détection).

**10.** Procédé selon la revendication 1, dans lequel l'image à valeurs de gris (5) est une image en couleurs ou à composantes de couleurs, notamment dans la plage de longueurs d'ondes visibles ou invisibles.

**11.** Procédé selon la revendication 1, dans lequel on détermine et conserve aussi pour les informations de position une information de grandeur de la partie de corps et notamment on la mémorise.

**12.** Procédé selon la revendication 11, dans lequel l'information de grandeur est fournie, par une variation relative de la grandeur du modèle (30) par rapport à la grandeur de l'image visée (5) ainsi que par une comparaison pour chacune des relations de grandeur différentes, pour la détermination d'une valeur de coïncidence respective pour chaque relation de grandeur de l'image visée et du modèle ainsi qu'en choisissant la meilleure valeur de coïncidence pour la détermination de l'information de grandeur.

**13.** Procédé selon la revendication 1, dans lequel on compare la reproduction intermédiaire dont les directions ont été évaluées (figure 2e, figure 4) au modèle (30) en formant plusieurs sommes de valeurs de similitude orientées angulairement, notamment en formant une somme respective de différences angulaires entre des tronçons de contours du modèle et de la reproduction intermédiaire dont les directions ont été évaluées (figure 2e, figure 4).

**14.** Procédé selon la revendication 13, dans lequel une valeur de seuil est fournie, laquelle est comparée à toutes les valeurs de similitude réparties sur l'image visée pour ne conclure à la présence d'une partie de corps (2) recherchée dans l'image visée que si une valeur est inférieure à une valeur minimale correspondant à la valeur de seuil en au moins un point de l'image.

**15.** Procédé selon la revendication 1, dans lequel on évalue les contours (5d, 5e) de la représentation figurative seulement quant à leurs directions de contours (5a', 4a', 4b', 5c') et on détermine par une comparaison avec le modèle (30) si la partie de corps reproduite (2) correspond au type de parties de corps prescrit par le modèle, au moins des directions de contours (5d', 5e') à l'intérieur du ou des parties de corps reproduites et des directions de contours (5a) de la ou des parties de corps reproduites et délimitées physiquement étant utilisées, à la suite de quoi la partie de corps est localisée quant à sa position et des informations de position associées sont conservées.

**16.** Procédé selon la revendication 1, dans lequel, comme préparation, une image de travail est élaborée par calcul, calculs lors desquels

(a) la représentation figurative (5) est convertie par calcul en une autre représentation (figure 2b) qui comporte des données concernant la direction des contours et dans laquelle une valeur de netteté est indiquée pour chaque direction ;
(b) l'autre représentation est traitée en surface avec une valeur de seuil (figure 2c) pour supprimer des données de direction aux points (1) de l'autre représentation auxquels la valeur de netteté est inférieure à la valeur de seuil de telle sorte qu'il reste dans l'image de travail (figure 3, figure 4) une information de direction réduite (5a', 5b') ;

l'image de travail étant utilisée comme image de modèle (30) ou comme image visée (figure 4).

**17.** Procédé selon la revendication 16, dans lequel l'information de direction restante reste inchangée dans l'image de travail mais les valeurs de netteté sont mises à une valeur standard pour toutes les directions restantes afin de neutraliser l'information de netteté.

18. Procédé selon la revendication 17, dans lequel, à l'étape suivante, l'information restante (les directions restantes) est évaluée en utilisant l'image de modèle (30) d'une partie de corps et la partie de corps représentée est localisée quant à sa position, des informations de position étant conservées.

19. Procédé selon la revendication 16, dans lequel l'autre représentation traitée en surface avec la valeur de seuil est traitée en surface avec un opérateur binaire pour obtenir une image de gabarit (figure 2d) qui est combinée en surface avec l'autre représentation.

20. Procédé selon la revendication 13, dans lequel, lors de la formation des sommes de valeurs de similitude, on utilise seulement un nombre limité de termes à additionner, à chaque fois pour une situation relative du modèle (30) et de la reproduction intermédiaire dont les directions ont été évaluées (figure 4), notamment moins de 80 % des termes à ajouter disponibles pour une situation relative respective, les différentes données de similitude utilisées comme termes à ajouter pour la formation de la valeur de similitude étant celles ayant les meilleures données de similitude.

21. Procédé selon la revendication 13 ou 20, dans lequel, pour la formation de différences angulaires, on compare seulement des angles aigus, des angles entre 90° et 180° étant convertis en angles correspondants entre 90° et 0° avant d'être comparés aux angles du modèle.

22. Procédé selon la revendication 21, dans lequel le modèle (30) ne contient que des angles entre 0° et 90° comme directions des contours contenus dans le modèle.

23. Procédé selon la revendication 1, pour la localisation au moins d'une partie de corps délimitée physiquement, telle que visage, main, jambe, du sujet représenté figurativement,
au moins une partie des contours accentués (figure 4) étant évalués quant à leurs directions (5a', 4a', 4b', 5c') par des comparaisons répétées avec l'image de modèle (30), chaque comparaison étant effectuée avec une autre association locale de l'image de modèle (30) et de la partie des contours accentués (figure 4), ce qui fait qu'il est formé à chaque fois une valeur de similitude pour chaque association locale ; et
une valeur de similitude maximale étant choisie parmi les valeurs de similitude des comparaisons, valeur avec laquelle la position de la partie de corps reproduite est localisée et une information de position associée est conservée.

24. Procédé selon la revendication 23, dans lequel la partie des contours accentués (figure 4) est une reproduction intermédiaire et la valeur de similitude locale d'une association locale est déterminée en additionnant des données de similitude individuelles basées sur l'angle des contours, notamment

- en formant une somme de différences angulaires entre des tronçons de contours de l'image de modèle (30) et de la reproduction intermédiaire (figure 2e, figure 4) sur au moins une zone de surface essentielle de l'image de modèle (30) ; ou
- en formant des différences angulaires entre des tronçons de contours de l'image de modèle (30) et de la reproduction intermédiaire (figure 2e, figure 4) puis en effectuant une transformation trigonométrique et enfin en additionnant les données de similitude résultantes pour former la valeur de similitude.

25. Procédé selon la revendication 23, dans lequel une valeur de seuil est fournie, laquelle est comparée à toutes les valeurs de similitude réparties sur la surface de la représentation figurative (5) pour ne conclure à la présence d'une partie de corps (2) recherchée que si une valeur est inférieure à une valeur minimale correspondant à la valeur de seuil en au moins un point.

26. Procédé selon la revendication 23, dans lequel une valeur de similitude est déterminée pour une association locale respective seulement en utilisant celles des données de similitude individuelles basées sur l'angle pour lesquelles aussi bien pour l'image de modèle (30) que pour la représentation intermédiaire (figure 2e) une valeur de direction existe au même point et dans lequel aux points où il n'existe pas d'angle comme information de direction dans au moins l'une des deux images (figure 2e, 30) il n'y a pas de contribution à la valeur de similitude déterminée pour cette association locale.

27. Procédé selon la revendication 24, dans lequel la similitude est d'autant meilleure ou plus grande que la valeur de similitude locale est plus petite.

60

41

40

P

3

2

Modell

30

Fig. 1

Fig. 2

EP 1 316 057 B1

Fig. 2a

Fig. 2b

Fig. 2c

Fig. 2d

Fig.2e

Fig. 3

Fig.4

Fig.5 (= Fig.2e)

EP 1 316 057 B1

Fig.6

Fig.7

Fig.8